# EUROPÄISCHE PATENTSCHRIFT

(11) **EP 2 502 009 B1**
(45) Veröffentlichungstag und Bekanntmachung des Hinweises auf die Patenterteilung: **02.07.2014**
(21) Anmeldenummer: 10787670.8
(22) Anmeldetag: 16.11.2010
(51) Int. Cl.: F24J 2/54, H01L 31/042

(54) **VERSTELLEINRICHTUNG EINER STATIONÄREN PHOTOVOLTAIK-ANLAGE**
ADJUSTING DEVICE OF A STATIONARY PHOTOVOLTAIC SYSTEM
DISPOSITIF DE RÉGLAGE D'UNE INSTALLATION PHOTOVOLTAÏQUE STATIONNAIRE

(30) Priorität: 18.11.2009 AT 18232009
(43) Veröffentlichungstag der Anmeldung: 26.09.2012
(73) Patentinhaber: Hilber, Franz, 6152 Trins (AT)
(72) Erfinder: Hilber, Franz, 6152 Trins (AT)
(74) Vertreter: Gangl, Markus
(86) Internationale Anmeldenummer: PCT/AT2010/000441
(87) Internationale Veröffentlichungsnummer: WO 2011/060467

(56) Entgegenhaltungen:
- DE-A1- 3 706 348
- DE-A1-102006 022 982
- DE-U1-202007 017 719
- US-A- 4 108 019
- US-A- 4 245 153
- US-A1- 2003 070 705

## Beschreibung

Die Erfindung betrifft eine Tragekonstruktion für eine stationäre Photovoltaik-Anlage, mit einem Trageteil, welches Befestigungsstellen für eine flächig ausgebildete Photovoltaik-Einheit aufweist und zumindest einer Antriebsvorrichtung zum angetriebenen Verstellen des Trageteils und wenigstens einer einachsigen Verstelleinrichtung, durch welche eine am Trageteil befestigte Photovoltaik-Einheit in Azimut und Elevation um eine Verstellachse zwischen einer Einrichtposition und einer Endposition verstellbar ist, wobei die Projektion der Flächennormalen der Photovoltaik-Einheit auf die horizontale Ebene in der Einrichtposition eine Einrichtachse definiert und die Projektion der Verstellachse auf die horizontale Ebene eine projizierte Verstellachse definiert.

Im Allgemeinen werden Photovoltaik-Anlagen so aufgestellt, dass die Aufnahmefläche der Photovoltaik-Einheit nach Süden in einer Ausgangsposition ausgerichtet ist. Eine Abweichung der Ausrichtung von Süden in Richtung Westen wird als positiver Azimut +a bezeichnet, eine Abweichung in Richtung Osten als negativer Azimut -a. Die exakte Ausrichtung der Photovoltaik-Einheit nach Süden wird als Azimut a=0 bezeichnet.

Als Elevation wird in der Photovoltaik-Technik der Neigungswinkel bezeichnet, den die Aufnahmefläche der Photovoltaik-Einheit mit der horizontalen Ebene bildet. Die Ausgangsstellung der Photovoltaik-Einheit einer Photovoltaik-Anlage wird üblicher Weise so gewählt, dass diese in Nord-Süd ausgerichtet ist, also bei Azimut a=0 und dabei eine Elevation hₘᵢₙ - also einen in Bezug auf die Sonne ideale Neigungswinkel - aufweist. Aus dieser Ausgangsstellung heraus erfolgt in der Regel die Verstellung der Photovoltaik-Einheit.

Derartige mit einer Antriebsvorrichtung verstellbare Tragekonstruktionen für stationäre Photovoltaik-Anlagen sind aus dem Stand der Technik hinlänglich bekannt.

Eine kostengünstigere Variante, die beispielweise in der US 2003/0070705 A1 beschrieben wird, wird dabei mit nur einer einachsigen Verstelleinrichtung ausgeführt, mit der die Photovoltaik-Einheit in ihrem Neigungswinkel und in ihrer Azimut-Ausrichtung so verstellt wird, dass sie dem Verlauf der Sonne im Wesentlichen folgt. Der Nachteil bei diesen einachsigen Verstelleinrichtungen ist, dass das Verfolgen des Sonnenstandes nur in eingeschränktem Maße stattfinden kann. Bei zweiachsigen Verstelleinrichtungen, bei denen normalerweise die zweite Achse im Wesentlichen einen 90° Winkel zur ersten Verstellachse bildet, ist eine Verfolgung des Sonnenstandes auf genauere Art und Weise möglich, dies ist aber mit erhöhten Kosten, durch die Verwendung eines zweiten Antriebs oder durch die Verwendung von nur einem Antrieb und einer zusätzlichen Übersetzungsvorrichtung, verbunden.

Aufgabe der Erfindung ist, die vorbeschriebenen Nachteile zu vermeiden und eine gegenüber dem Stand verbesserte Tragenkonstruktion für eine stationäre Photovoltaik-Anlage anzugeben.

Dies wird bei der erfindungsgemäßen Tragekonstruktion dadurch erreicht, dass die projizierte Verstellachse zur Einrichtachse einen Winkel im Bereich von mehr als 5 Grad und weniger als 80 Grad, vorzugsweise im Bereich von mehr als 10 Grad und weniger als 60 Grad, bildet.

Somit weicht die projizierte Verstellachse von der Einrichtachse ab, was dazu führt, dass eine Verschwenkung nicht um eine gedachte Mittelachse der Photovoltaik-Einheit erfolgt, sondern die Verschwenkung entlang einer Achse verläuft, die von dieser Mittelachse abweicht. Dies führt im Weiteren dazu, dass es zu unterschiedlichen zurückgelegten Weglängen der Enden der Photovoltaik-Einheit während des Schwenkvorganges kommt. Somit senkt sich ein Ende der Photovoltaik-Einheit weniger in Richtung Boden und das andere Ende der Photovoltaik-Einheit mehr in Richtung Boden. Bei geeigneter Wahl der Schwenkachse wird es somit ermöglicht, dass - aufgrund des Neigungswinkels in der Einrichtposition, bei der sich ein Ende näher am Boden befindet und das andere Ende sich aufgrund des Neigungswinkels in einer höheren Position über dem Boden befindet - das näher am Boden befindliche Ende sich weniger in Richtung Boden senkt, hingegen das sich weiter vom Boden weg befindliche Ende sich mehr bei der Verschwenkung in Richtung Boden bewegt. Somit kann, bei geeigneter Wahl der Verstellachse, erreicht werden, dass sich beiden Enden der Photovoltaik-Einheit bei einer maximalen Verstellung - bei der die Photovoltaik-Einheit die maximale Elevation aufweist, und sich in ihrer Endposition befindet - beide Enden einen im Wesentlichen gleichen Abstand zum Boden aufweisen. Durch diese Vorgehensweise wird mit nur einer einachsigen Verstelleinrichtung erreicht, dass sowohl eine größere Elevation und ein größerer Azimut ermöglicht wird als dies bei einer einachsigen Verstelleinrichtung der Fall wäre, bei der die Verstellachse parallel zur oder in der Einrichtachse verläuft. Dadurch wird eine höhere Energieausbeute bei Verwendung einer einachsigen Verstelleinrichtung ermöglicht, und gegenüber einer zweiachsigen Verstelleinrichtung werden Herstellungskosten eingespart.

Weitere vorteilhafte Ausführungsformen der Erfindung sind in den abhängigen Ansprüchen definiert:

Als besonders vorteilhaft hat es sich herausgestellt, wenn eine zweite einachsige Verstelleinrichtung vorgesehen ist, welche auf dieselbe Weise wie die erste Verstelleinrichtung ausgebildet ist, wobei das Trageteil wechselweise mit der ersten Verstelleinrichtung und der zweiten Verstelleinrichtung koppelbar ist und die Verschwenkbereiche der ersten Verstelleinrichtung und der zweiten Verstelleinrichtung in Bezug auf die Einrichtachse spiegelbildlich angeordnet sind. Durch die Verwendung einer zweiten einachsigen Verstelleinrichtung kann der Bereich, in dem die Photovoltaik-Einheit dem Sonnenstand folgen kann, im Wesentlichen verdoppelt werden.

Gemäß einem bevorzugten Ausführungsbeispiel kann vorgesehen sein, dass die Antriebsvorrichtung einen gemeinsamen Antrieb für beide Verstelleinrichtungen aufweist. Durch die Verwendung eines einzigen gemeinsamen Antriebs für beide Verstelleinrichtungen können Herstellungskosten eingespart werden. Durch die Auswahl eines geeigneten Angriffspunktes für die Antriebsvorrichtung, vorzugsweise am Trageteil, ist eine Verstellung der beiden Verstelleinrichtungen durch einen gemeinsamen Antrieb ohne die Verwendung einer zusätzlichen Übersetzungsvorrichtung möglich.

Weiters kann bevorzugt vorgesehen sein, dass der Antrieb der Antriebsvorrichtung als Linearantrieb ausgebildet ist. Linearantriebe ermöglichen eine präzise Verstellung des Trageteils durch die Antriebsvorrichtung.

Als besonders vorteilhaft hat es sich erwiesen, wenn der Linearantrieb der Antriebsvorrichtung zumindest eine Kolben-Zylinder-Einheit aufweist. Kolben-ZylinderEinheiten stellen eine kostengünstige Variante für Linearantriebe dar.

Besonders bevorzugt kann vorgesehen sein, dass die Tragekonstruktion zumindest ein 3D-Gelenk, vorzugsweise ein 3D-Gelenklager, für das Verstellen des Trageteiles aufweist. Durch die Verwendung eines 3D-Gelenkes wird es ermöglicht, dass dieses 3D-Gelenk gemeinsam für beide Verstelleinrichtungen verwendet wird.

Als besonders vorteilhaft hat es sich dabei herausgestellt, wenn die Tragekonstruktion eine Koppelvorrichtung mit korrespondierenden Koppelelementen aufweist über die die beiden Verstelleinrichtungen wechselweise mit dem Trageteil koppelbar sind. Somit kann gewährleistet werden, dass jeweils nur eine Verstelleinrichtung mit dem Trageteil gekoppelt ist.

Gemäß einem bevorzugten Ausführungsbeispiel kann vorgesehen sein, dass die Tragekonstruktion eine Verriegelungsvorrichtung aufweist mit der wechselweise die jeweiligen korrespondierenden Koppelelemente der Koppelvorrichtung verriegelbar und entriegelbar sind. Durch die Verwendung einer Verriegelungsvorrichtung wird ein sicherer Halt der Koppelvorrichtung und dem Trageteil gewährleistet.

Als vorteilhaft hat es sich weiters herausgestellt, dass die Verriegelungsvorrichtung einen Antrieb, vorzugsweise einen Linearantrieb, aufweist mit dem wechselweise die jeweiligen korrespondierenden Koppelelemente der Koppelvorrichtung verriegelbar und entriegelbar sind. Durch die Verwendung eines Linearantriebes kann die Verriegelung und Entriegelung automatisch erfolgen.

Als vorteilhaft hat es sich herausgestellt, wenn eine Verschwenkung des Trageteils über die erste Verstelleinrichtung eine Abhebung des Trageteils von zumindest einem Koppelelement der zweiten Verstelleinrichtung bewirkt und eine Verschwenkung des Trageteils über die zweite Verstelleinrichtung eine Abhebung des Trageteils von zumindest einem Koppelelement der ersten Verstelleinrichtung bewirkt. Durch die Loslösung des Trageteils an einer Stelle der Verstelleinrichtung wird die Verschwenkung über zwei Verstelleinrichtungen, die nicht in der gleichen Achse verlaufen, ermöglicht.

Bevorzugt kann weiters vorgesehen sein, dass die Tragekonstruktion, die wenigstens zwei - vorzugsweise unterschiedlich lange - Steher, an denen die beiden Verstelleinrichtungen, das 3D-Gelenk und zumindest zwei Koppelelemente der Koppelvorrichtung angeordnet sind, und eine Anschluss- und Steuerungsvorrichtung aufweist, wobei an einem Steher zumindest zwei Koppelelemente der Koppelvorrichtung angeordnet sind und / oder an dem anderen Steher die Anschluss- und Steuerungsvorrichtung und / oder das 3D-Gelenk angeordnet ist und / oder ein Steher eine im Wesentlichen dreieckige Form und/oder ein Steher eine im Wesentlichen viereckige Form aufweist und / oder zumindest ein, vorzugsweise beide, Steher zumindest eine Verstrebung aufweist.

Gemäß einem möglichen Ausführungsbeispiel kann vorgesehen sein, dass die zumindest eine Stelle, an der die Antriebsvorrichtung das Trageteil antreibt zu einer Stelle, vorzugsweise von allen Stellen, an der die Verstelleinrichtung das Trageteil verstellt, distanziert ist. Durch einen zur Drehachse versetzten Angriffspunkt für die Krafteinwirkung zur Verschwenkung des Trageteils und somit einer auf dem Trageteil angebrachten Photovoltaik-Einheit kann es ermöglicht werden, dass ein geringerer Kraftaufwand zum Verstellen notwenig ist und auch dass mit einer Antriebsvorrichtung zumindest zwei Verstelleinrichtungen betrieben werden können.

Gemäß einem bevorzugten Ausführungsbeispiel kann vorgesehen sein, dass die Tragekonstruktion Befestigungsstellen zur Befestigung der Photovoltaik-Einheit aufweist, wobei die Tragekonstruktion flach zusammenlegbar ist. Durch das flache Zusammenlegen wird es ermöglicht, dass mehrere Tragekonstruktionen aufeinander gestapelt werden können. Dies trägt zu geringem Platzbedarf bei Lagerung oder Transport bei.

Besonders vorteilhaft hat es sich herausgestellt, wenn bei einer Tragekonstruktion mit einer Bodenkonstruktion, die zumindest teilweise im Boden eingrabbar ist und einem im Boden eingrabbaren flächigen Gebilde, welches mit der Bodenkonstruktion im Montagezustand so in Verbindung steht, dass die auf das flächige Gebilde durch die Last des Bodenmaterials einwirkende Kräfte zur sicheren Verankerung der Bodenkonstruktion im Boden auf die Bodenkonstruktion übertragbar sind, das flächige Gebilde flexibel ausgebildet ist. Durch die Verwendung eines flexiblen flächigen Gebildes wird erreicht, dass dieses sowohl zusammenlegbar oder auch einrollbar ausgebildet ist und somit einen geringeren Platzbedarf während der Lagerung und auch während des Transportes an den Aufstellungsort aufweist. Flexibel heißt in diesem Zusammenhang, dass das Material des flächigen Gebildes nicht starr ausgebildet ist. Das Material des flächigen Gebildes weist also Eigenschaften auf, die ähnlich einem Textil, einer Plane oder einer Folie sind, welche ihre äußere Form sehr leicht verändern lassen, wie zum Beispiel aufrollen, ineinander klappen usw. und die sich aber auch wieder von diesem Zustand zurückbilden lassen.

Schutz wird auch begehrt für eine stationäre Photovoltaikanlage mit einer Tragekonstruktion nach einem der Ansprüche 1 bis 14.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen
- Fig. 1a: eine perspektivische Ansicht einer zusammengelegten Tragekonstruktion,
- Fig. 1b: eine Detailansicht von Fig. 1a,
- Fig. 2a: eine perspektivische Ansicht mehrerer gestapelter Tragekonstruktionen,
- Fig. 2b, 2c: eine Detailansicht von Fig. 2a,
- Fig. 3a: eine Untersicht eines PV-Paneels mit Haltevorrichtungen,
- Fig. 3b: eine Vorderansicht eines PV-Paneels mit Haltevorrichtungen,
- Fig. 3c: eine perspektivische Ansicht eines PV-Paneels mit Haltevorrichtungen,
- Fig. 4a: eine perspektivische Ansicht einer Photovoltaik-Einheit mit mehreren Photovoltaik-Paneelen auf einem Träger im zusammengeklappten Zustand,
- Fig. 4b: mehrere zusammengeklappte Photovoltaik-Einheiten nebeneinander in perspektivischer Ansicht,
- Fig. 5: eine perspektivische Ansicht eines Transportmittels beladen mit mehreren Tragekonstruktionen und mehreren Photovoltaik-Einheiten,
- Fig. 6a bis Fig. 6c: das Entladen und Aufstellen der Tragekonstruktion am Bestimmungsort,
- Fig. 7a und Fig. 7d: eine perspektivische Ansicht einer aufgeklappten und aufgestellten Tragekonstruktion,
- Fig. 7b und Fig. 7c: eine Detailansicht von Fig. 7a,
- Fig. 8: eine perspektivische Ansicht einer aufgestellten Tragekonstruktion in einer Baugrube,
- Fig. 9: eine Tragekonstruktion nach dem Stand der Technik,
- Fig. 10: einen Schnitt durch das Erdreich und einer Tragekonstruktion mit einer Fundamentierung mit einem flexiblen flächigen Gebilde,
- Fig. 11a bis Fig. 11c: das Entladen und Auseinanderklappen einer Photovoltaik-Einheit am Bestimmungsort in perspektivischer Ansicht,
- Fig. 11d: eine perspektivische Ansicht einer auseinander geklappten Photovoltaik-Einheit,
- Fig. 12: eine perspektivische Ansicht einer Photovoltaik-Anlage,
- Fig. 13a: eine perspektivische Ansicht einer schematischen, stationären Photovoltaik-Anlage, '
- Fig. 13b: eine Draufsicht einer schematischen Tragekonstruktion einer stationären Photovoltaik-Anlage,
- Fig. 14a bis Fig. 14c: perspektivische Ansichten einer Photovoltaik-Anlage mit unterschiedlichen Positionen der Photovoltaik-Einheiten,
- Fig. 15: eine perspektivische Ansicht einer Photovoltaik-Anlage mit Photovoltaik-Einheit in Einrichtposition (Nord-Süd-Ausrichtung),
- Fig. 16: eine perspektivische Ansicht einer Photovoltaik-Anlage mit Photovoltaik-Einheit in gekippter Position (Westausrichtung),
- Fig. 17: Photovoltaik-Anlage in perspektivischer Ansicht mit gekippter Photovoltaik-Einheit (Ostausrichtung),
- Fig. 18a, 18b: Schnitt durch eine Koppelvorrichtung einer Tragekonstruktion einer Photovoltaik-Anlage,
- Fig. 19a: eine Vorderansicht eines 3D-Gelenklagers,
- Fig. 19b: Schnitt von Fig. 19a,
- Fig. 19c: perspektivische Ansicht eines 3D-Gelenklagers einer Photovoltaik-Anlage.

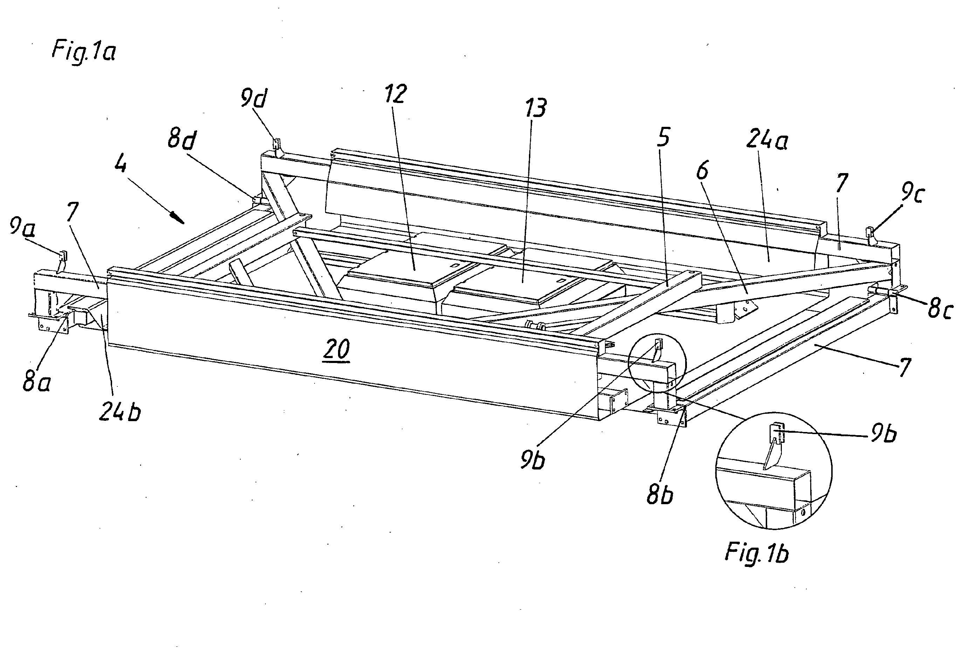

Figur 1a zeigt eine flach zusammengelegte Tragekonstruktion 4 einer stationären Photovoltaik-Anlage 1 (nicht dargestellt). Die beiden Steher 5 und 6 sind dabei in den Innenraum der Bodenkonstruktion 7 geklappt, wodurch sich eine Gesamthöhe der zusammengeklappten Tragekonstruktion 4 ergibt, die im Wesentlichen durch die Höhe der geklappten Bodenkonstruktion 7 gegeben ist. Die geklappte Bodenkonstruktion 7 und auch damit die beiden Steher 5 und 6 werden über die Gelenke 8a, 8b, 8c, 8d geschwenkt. In die zusammengeklappte Bodenkonstruktion 7 ist dabei das flexible flächige Gebilde 20, in diesem Ausführungsbeispiel aus zwei Bahnen 24a und 24b bestehend, eingebracht, vorzugsweise eingefädelt. In einem weiteren Ausführungsbeispiel ist es vorgesehen, das flächige Gebilde 20 einstückig auszubilden. Die Anschluss- und Steuerungsvorrichtung 12 und der Wechselrichter 13 sind in diesem Ausführungsbeispiel am Steher 6 angebracht und werden somit mit diesem beim Verschwenkvorgang mitverschwenkt.

Die Bodenkonstruktion 7 ist als Rahmen ausgebildet, was zu einem sehr stabilen Gebilde führt und durch das das flexible flächige Gebilde 20, genaugenommen deren Bahnen 24a und 24b, durchgeführt werden können.

An der Tragekonstruktion 4 sind dabei in diesem Ausführungsbeispiel vier Verbindungselemente 9a, 9b, 9c, 9d angeordnet, über die die zusammengelegte Tragekonstruktion 4 mit einer weiteren Tragekonstruktion 4 verbunden, genau genommen gestapelt, werden kann.

Figur 1b zeigt im Detail ein Verbindungselement 9b, mit dem die Tragekonstruktion 4 mit einer weiteren Tragekonstruktion 4 verbunden werden kann. Ebenso ist es natürlich vorstellbar, dass diese Verbindungselemente 9a bis 9d nicht als eigene Bauteile ausgeführt sind, sondern sich aus der Form und der Gestaltung der Bodenkonstruktion 7 ergeben. Ausschlaggebend ist dabei nur, dass übereinander gestapelte Tragekonstruktionen 4 verrücksicher angeordnet werden können und dass diese bei deren Lagerung bzw. deren Transport ihre Position einbehalten können. Somit wären bei einem Transport keinerlei zusätzlichen Materialien zur Sicherung der Tragekonstruktion notwendig, was zu einem geringen Materialaufwand für den Transport und ebenso geringem Verpackungsmaterialaufwand führt. Natürlich können die gestapelten Tragekonstruktionen 4 noch zusätzlich gesichert werden, zum Beispiel mittels eines Spanngurtes, um jegliche Gefahr des Verrutschens auszuschließen.

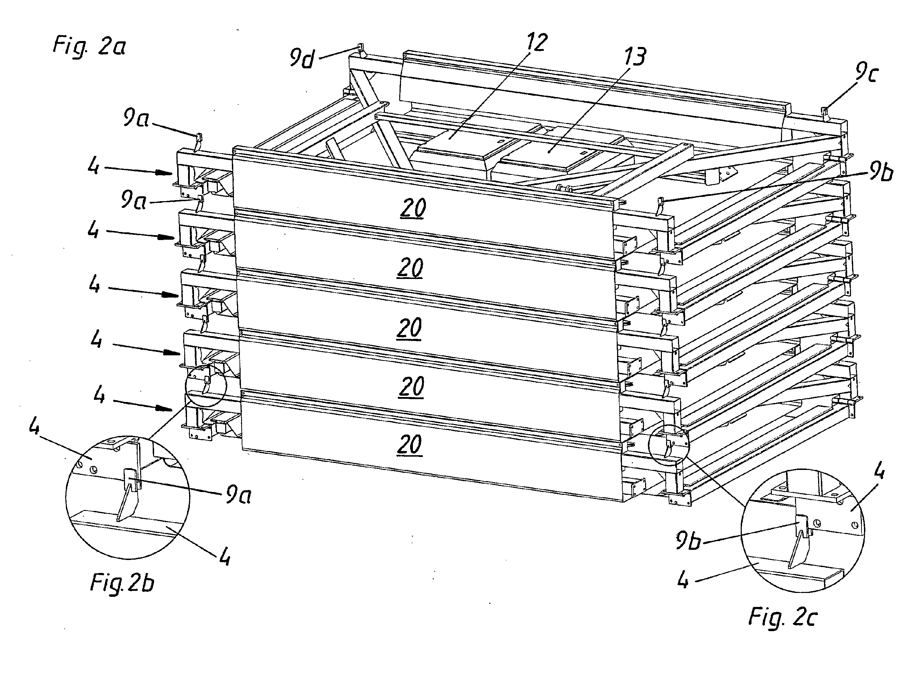

Figur 2a zeigt fünf aufeinandergestapelte Tragekonstruktionen 4, die über die Verbindungselemente 9a, 9b. 9c, 9d miteinander verbunden sind. Die Verbindungselemente 9c und 9d sind nur bei der obersten Tragekonstruktion 4 sichtbar, diese befinden sich natürlich ebenso auf allen anderen vier Tragekonstruktionen 4 und die Verbindung wird über diese Verbindungselemente 9a bis 9d zur darüber liegenden Tragekonstruktion 4 hergestellt. Das flexible flächige Gebilde ist dabei jeweils in den Tragekonstruktionen 4 eingelegt. Ebenso befinden sich die Anschluss- und Steuerungsvorrichtungen 12 als auch zumindest ein Wechselrichter 13 im Inneren der zusammengeklappten Tragekonstruktionen 4. Somit können mehrere Tragekonstruktionen 4 platzsparend transportiert bzw. gelagert werden.

Figur 2b und Figur 2c zeigen im Detail die Verbindungselemente 9a und 9b, wie sie mit einer darüber liegenden Tragekonstruktion 4 in Verbindung stehen und diese in ihrer Position fixieren.

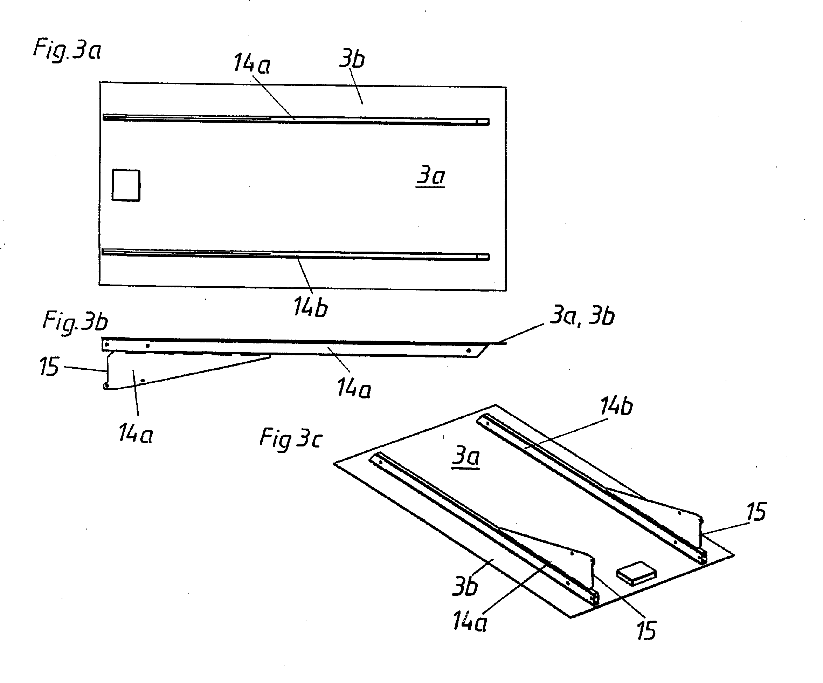

Figur 3a zeigt die Unterseite eines Photovoltaik-Paneels 3a oder auch 3b, welche in diesem Ausführungsbeispiel mit zwei aufgeklebten Haltevorrichtungen 14a und 14b versehen sind. Durch das Aufkleben der Haltevorrichtung ist ein Diebstahlschutz gegeben, da die Verklebung nicht ohne Beschädigung des Photovoltaik-Paneels 3a, 3b gelöst bzw. nur sehr schwer - mit Kleberrückständen am Photovoltaik-Paneel - gelöst werden kann. Die Haltevorrichtungen 14a und 14b weisen in diesem Ausführungsbeispiel eine Anschlagelement 15 auf, mit dem die Position des Photovoltaik-Paneels 3a, 3b im ausgeklappten Zustand am Träger 10 (nicht dargestellt) vorgegeben wird.

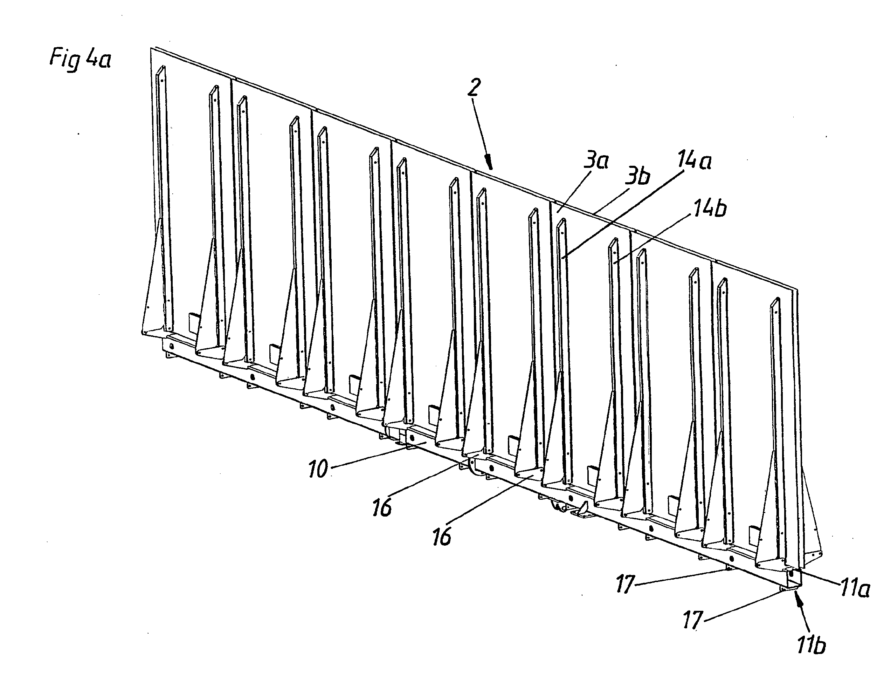

Figur 4a zeigt eine Photovoltaik-Einheit 2 im zusammengeklappten Zustand. Dabei sind jeweils zwei Photovoltaik-Paneele 3a und 3b mit ihren Empfangsflächen zueinander geklappt, wobei sie sich nicht berühren. An dieser Photovoltaik-Einheit 2 sind sechzehn dieser Photovoltaik-Paneele 3a und 3b auf dem Träger 10 paarweise angeordnet. Befestigt sind diese Photovoltaik-Paneele 3a und 3b mit Haltevorrichtungen 14a und 14b, welche wiederum über die Arretiervorrichtung 16 in ihrer Position im zusammengeklappten Zustand fixiert werden können. Einlagen verhindern weiters den Kontakt der Photovoltaik-Paneele (nicht dargestellt). Im ausgeklappten Zustand (nicht dargestellt) werden die Haltevorrichtungen 14a und 14b mit der Arretiervorrichtung 17 verbunden und somit sind die Photovoltaik-Paneele 3a, 3b und in ihrer Position fixiert. Die Anordnung der Photovoltaik-Paneele 3a, 3b und deren Haltevorrichtungen 14a und 14b ist in diesem Ausführungsbeispiel an der Seitenfläche 11a des Trägers 10 vorgenommen, wodurch die gegenüber liegende Seitenfläche 11 b des Trägers 10 frei bleibt und somit zur Montage der zusammengeklappten als auch auseinander geklappten Photovoltaik-Einheit 2 verwendet werden kann. Somit sind keinerlei Umbaumaßnahmen notwendig um eine zusammengeklappte Photovoltaik-Einheit 2 auf einem Transportmittel zu befestigen.

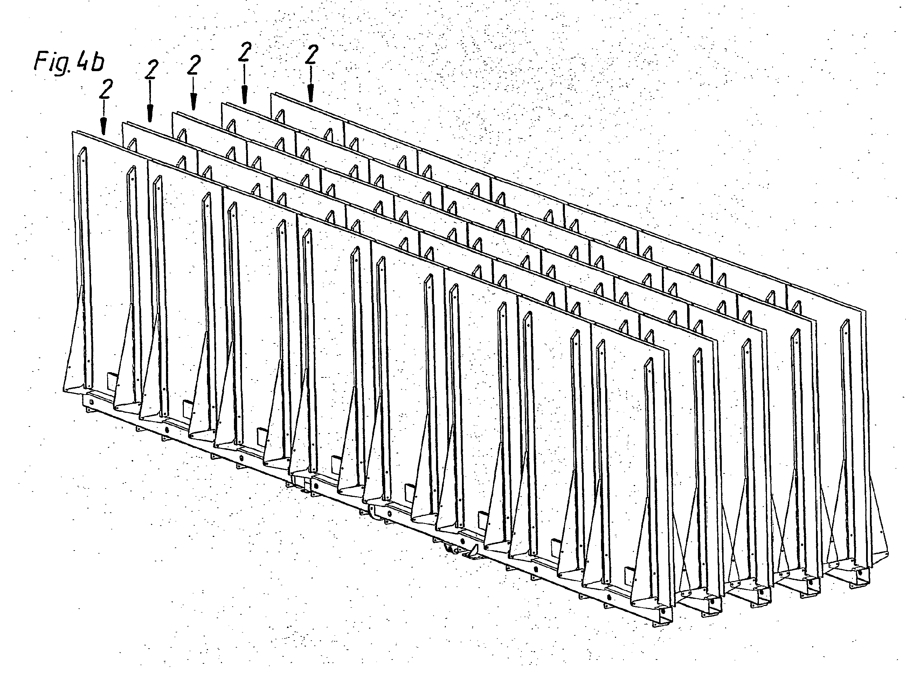

Figur 4b zeigt mehrere zusammengeklappte Photovoltaik-Einheiten 2 platzsparend nebeneinander aufgestellt.

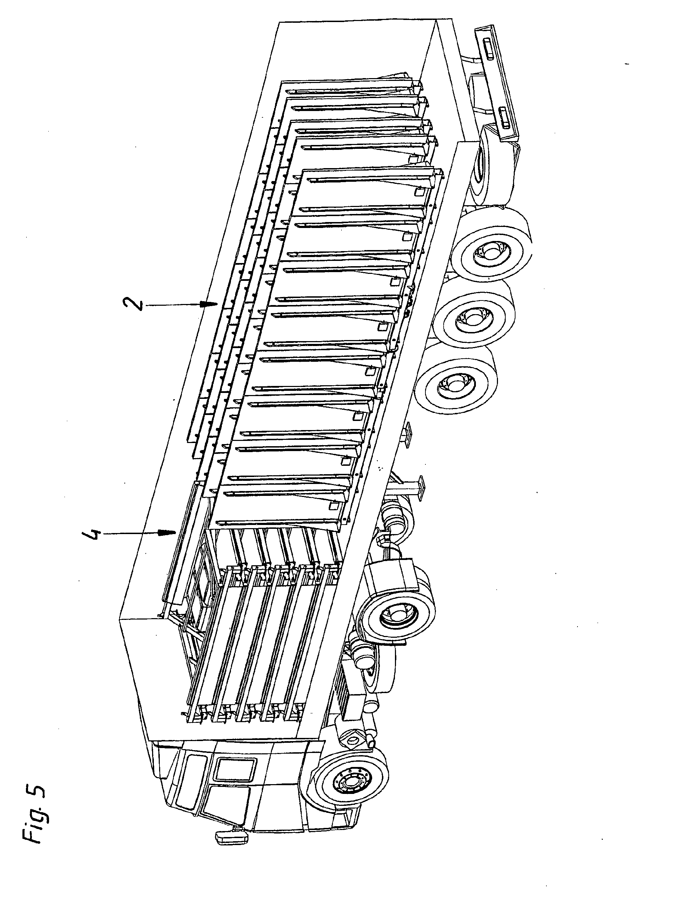

In Figur 5 ist die Beladung eines LKWs gezeigt, auf dem mehrere Tragekonstruktionen 4 als auch mehrere Photovoltaik-Einheiten 2 Platz finden. Die Tragekonstruktionen 4 sind verrutschsicher übereinander gestapelt und die Photovoltaik-Einheiten 2 können mittels des Trägers 10 auf der Ladefläche des LKWs verrutsch- und kippsicher montiert werden. Somit können bis zu sechs stationäre Photovoltaik-Anlagen gleichzeitig auf einem handelsüblichen LKW transportiert werden.

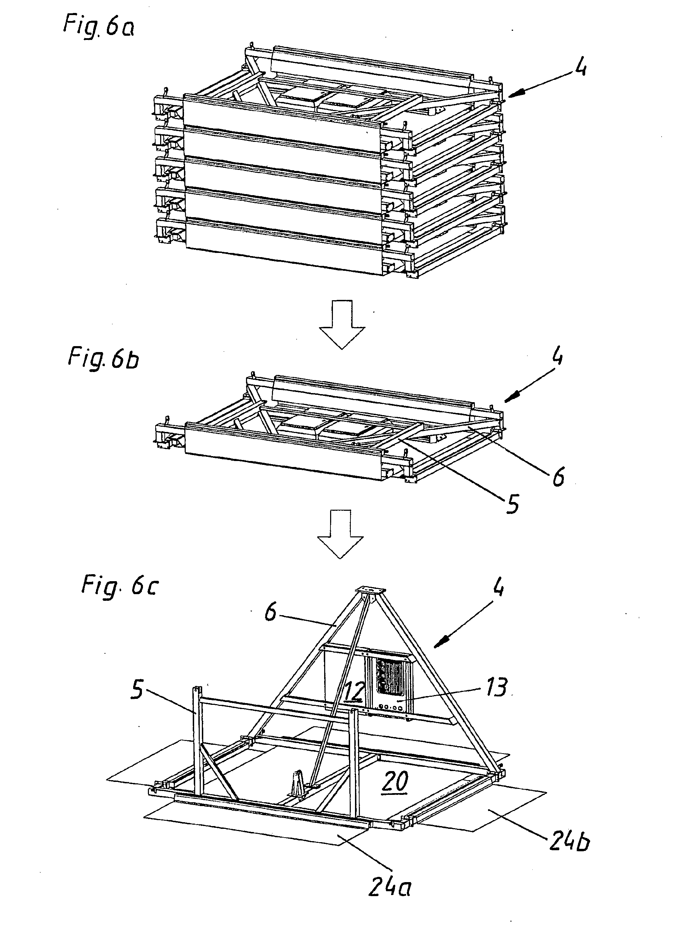

Figur 6a zeigt fünf aufeinander gestapelte Tragekonstruktionen 4, von denen anschließend, wie in Figur 6b gezeigt, eine Tragekonstruktion 4 abgenommen und diese, wie in Figur 6c gezeigt, an ihrem Bestimmungsort aufgestellt werden kann. Anschließend werden die Steher 5 und 6 ausgeklappt, womit gleichzeitig das flexible flächige Gebilde 20 entfaltet und gespannt wird. Dabei erheben sich zusammen mit dem Steher 6 gleichzeitig die Anschluss- und Steuerungsvorrichtung 12 und der Wechselrichter 13. Die beiden Steher 5 und 6 werden in ihrer aufgerichteten Position fixiert und können anschließend die Photovoltaik-Einheit 2 (nicht dargestellt) aufnehmen.

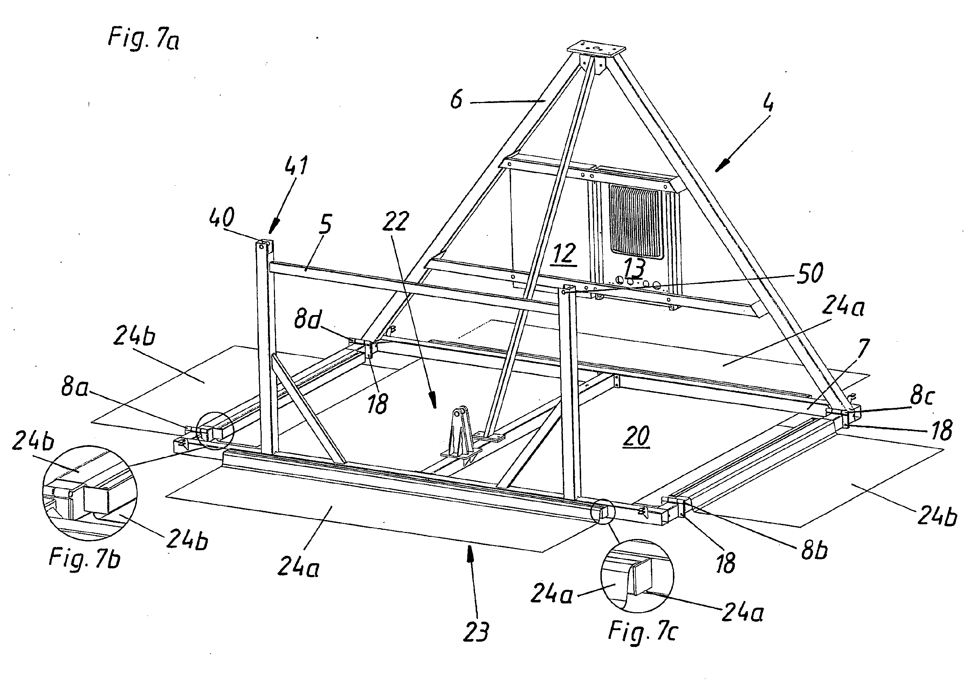

Figur 7a zeigt eine auseinander geklappte Tragekonstruktion 4. Die Bodenkonstruktion 7 wurde dabei über die Gelenke 8a, 8b, 8c, 8d aufgeklappt und bildet einen Rahmen. Die Gelenke 8a, 8b, 8c, 8d können in ihrer Position über die Bohrungen 18 fixiert werden. Durch das Auseinanderklappen der Bodenkonstruktion 7 haben sich automatisch die beiden Steher 5 und 6 miterhoben und sind nun ebenfalls in ihrer Position durch die Bohrungen 18 fixierbar, zum Beispiel durch Verschraubung.

Ebenfalls hat sich durch das Auseinanderklappen der Bodenkonstruktion 7 das flexible flächige Gebilde 20 aufgeklappt und weist somit eine größere Grundfläche 23 auf als die Standfläche 22 der Bodenkonstruktion 7 ist. Die Standfläche 22 der Bodenkonstruktion 7 ergibt sich aus der Fläche die der Rahmen umspannt, die Grundfläche 23 des flächigen Gebildes 20 ergibt sich aus der Summe der beiden Bahnen 24a und 24b des flächigen Gebildes abzüglich der Fläche einer Bahn, wo diese die andere Bahn bedeckt. Dadurch dass die Grundfläche 23 größer als die Standfläche 22 ist wird eine stabilere Verankerung der Tragekonstruktion 4 im Boden ermöglicht.

Die beiden Bahnen 24a, 24b des flexiblen flächigen Gebildes 20 sind in diesem Ausführungsbeispiel durch die Streben der Bodenkonstruktion 7 verlegt, genau genommen durchgefädelt (siehe Figur 7b und Figur 7c), was zum automatischen Spannen des flexiblen flächigen Gebildes 20 beim Auseinanderklappen der Bodenkonstruktion 7 führt. Das flexible flächige Gebilde 20 ist dabei vorzugsweise wasserdurchlässig ausgebildet, wodurch bei Regen etc. es gewährleistet wird, dass das Wasser durch die Bodenkonstruktion 4, genaugenommen dem flexiblen flächigen Gebilde 20, abrinnen kann und sich somit nicht negativ auf die Stabilität der Bodenkonstruktion 7 im Boden auswirkt.

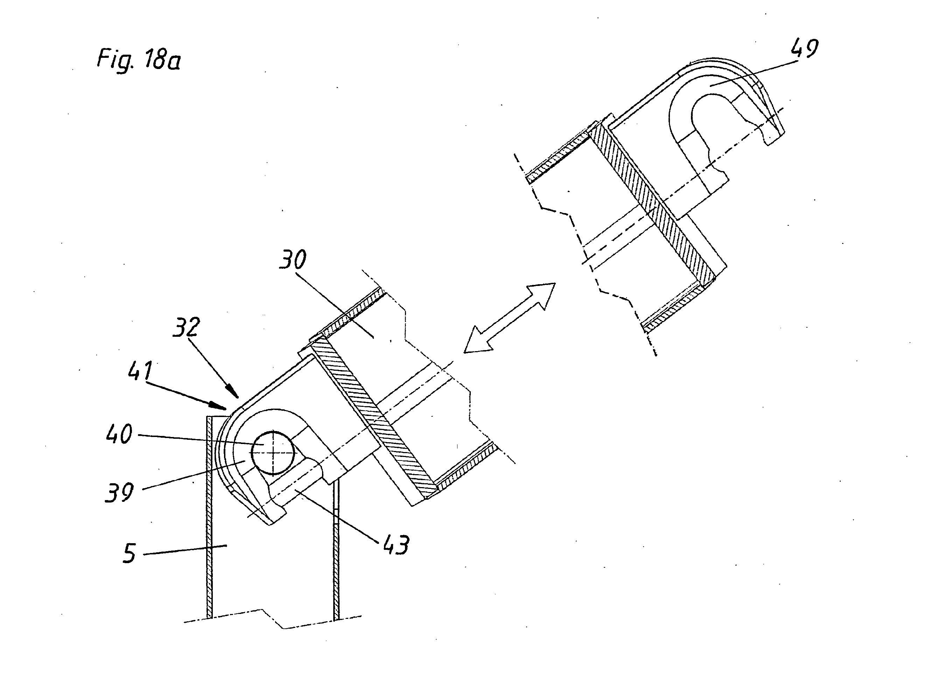

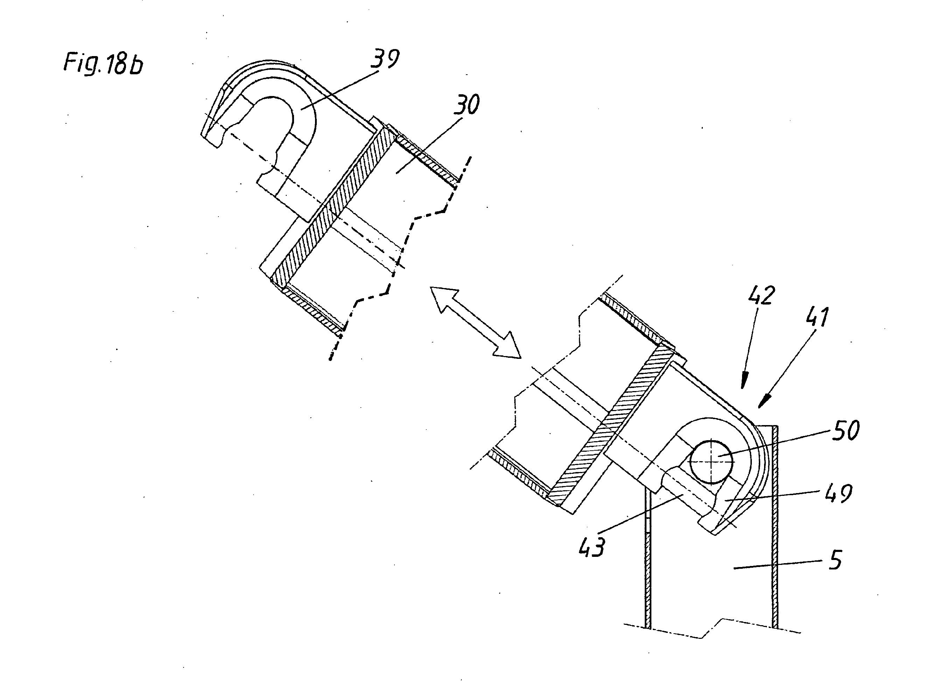

Am Steher 5 sind weiters die Koppelelemente 40 und 50 der Koppelvorrichtung 41 angeordnet, welche für die Verschwenkung einer nicht dargestellten Photovoltaik-Einheit vorgesehen sind (siehe Figur 18a und 18b).

Am Steher 6 sind der Wechselrichter 13 und die Anschluss- und Steuerungsvorrichtung 12 angeordnet, wodurch diese Tragekonstruktion 4 als "Standalone Anlage" betrieben werden kann, sofern sie mit einer Photovoltaik-Einheit 2 versehen wird.

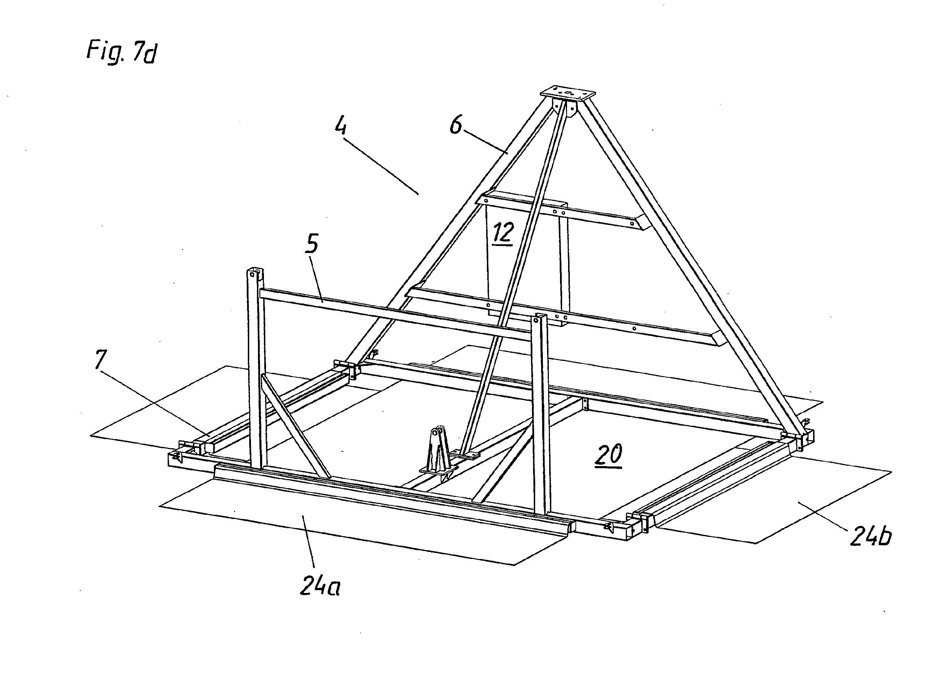

Bei Errichtung eines Photovoltaik-Kraftwerkes, bestehend aus mehreren Photovoltaik-Anlagen 1 (nicht dargestellt) ist ein Wechselrichter 13 nur bei einer der Tragekonstruktionen 4, wie in Figur 7a dargestellt, notwendig. Für die weiteren Photovoltaik-Anlagen 1 (nicht dargestellt) wird eine Tragekonstruktion 4 benötigt, wie sie in Figur 7d dargestellt ist. Für diese gilt die gleiche Beschreibung wie für Figur 7a, mit dem einzigen Unterschied, dass eben kein Wechselrichter 13 (nicht dargestellt) benötigt wird.

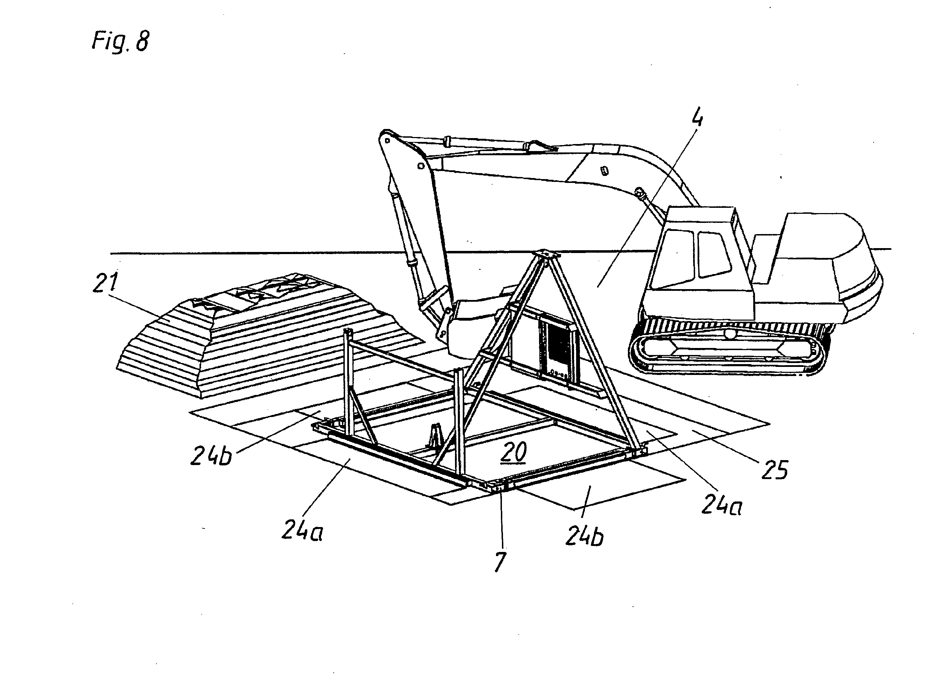

Figur 8 zeigt eine Tragekonstruktion 4, die in einer Baugrube 25 aufgestellt wurde. Nach erfolgtem Einbringen und Ausrichten der Tragekonstruktion 4 und dem Ausbreiten des flexiblen flächigen Gebildes 20 kann diese nun mit Fundament bildendem Material, vorzugsweise mit dem vorher ausgehobenem, Bodenmaterial 21 befüllt werden. Ebenso hätte natürlich auch anderes Material, welches sich nicht am Aufstellungsort befunden hat, für die Befüllung verwendet werden können, wie etwa Sand, Kies, Beton usw. Durch die Last des Bodenmaterials 21 auf das flächige Gebilde 20 und deren über die Bodenkonstruktion 7 hinausreichenden Bahnen 24a und 24b wird eine sichere Verankerung der Bodenkonstruktion 7 im Boden erreicht. Dadurch, dass das flächige Gebilde 20 flexibel ausgebildet ist, kann es im Transportzustand übereinandergeschlagen werden und am Aufstellungsort durch das Auseinanderklappen der Bodenkonstruktion 7 aufgespannt werden. Bevorzugter Weise ist das Material des flexiblen flächigen Gebildes 20 zugfest in Längs- und Querrichtung ausgebildet. Dabei hat sich gezeigt, dass Geokunststoffe am besten für diese Aufgaben der Fundamentierung geeignet sind. Ebenso sind natürlich alle anderen flexiblen Materialien für diese Fundamentierungsart vorstellbar.

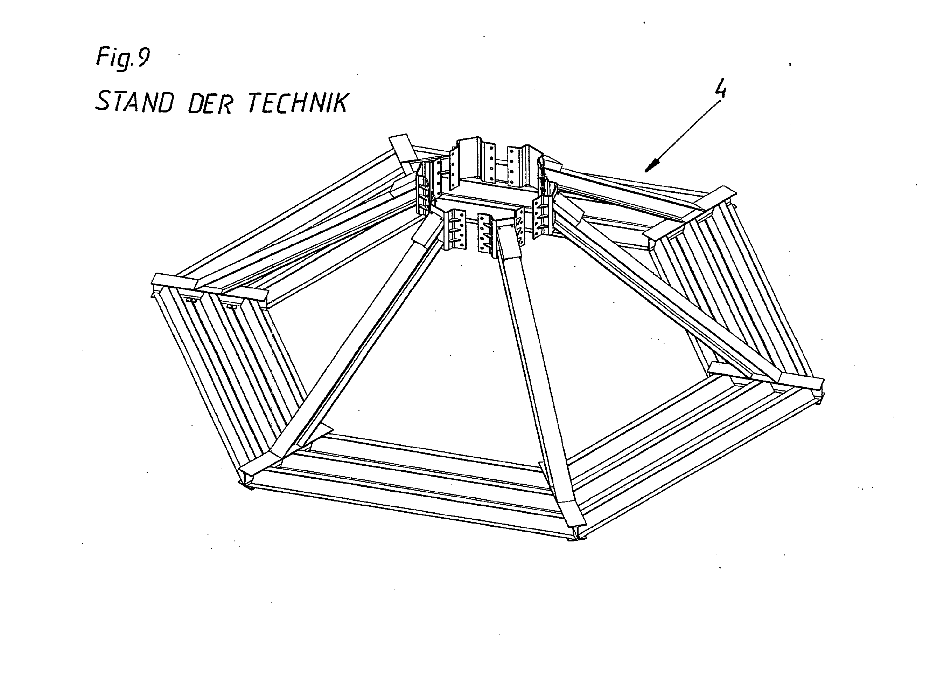

Ebenso sind natürlich unterschiedliche Tragekonstruktionen 4 für diese Art der Fundamentierung einer Photovoltaik-Anlage 1 (nicht dargestellt) geeignet. So zeigt Figur 9 eine weitere, andere Tragekonstruktion 4 für diese Fundamentierungsart. In eine derartige Tragekonstruktion 4 kann ebenso ein flächiges Gebildet 20 eingebracht werden und die eben in Figur 8 dargelegte Fundamentierungsmethode ausgeführt werden.

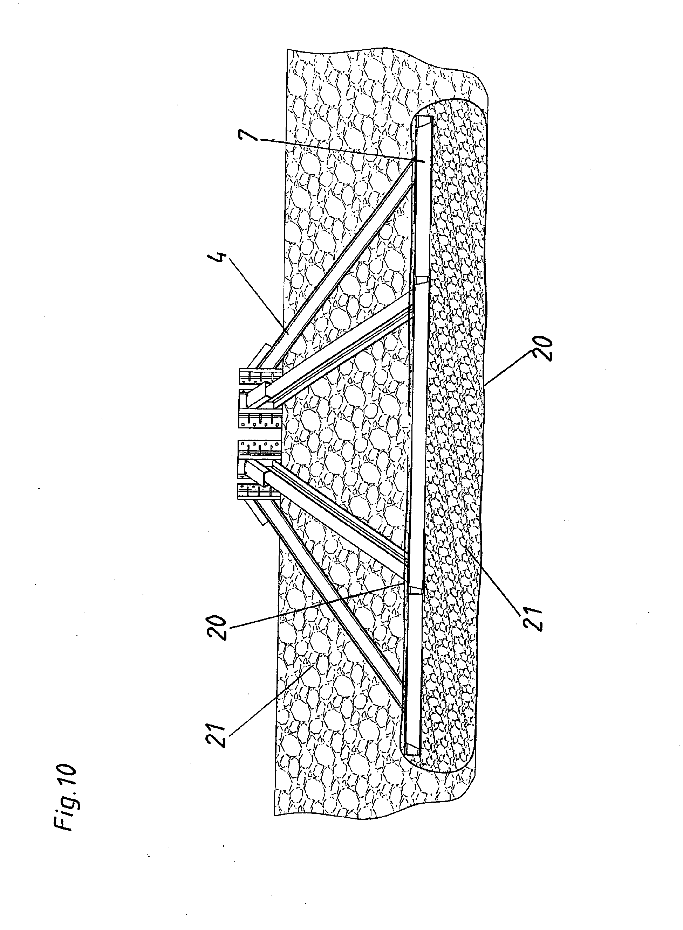

Figur 10 zeigt eine weitere Variante einer möglichen Verankerungsmethode einer Tragekonstruktion 4 für eine Photovoltaik-Einheit 2 einer stationären Photovoltaik-Anlage 1 (nicht dargestellt). Dabei wird zuerst Bodenmaterial 21 ausgehoben und dadurch eine Baugrube 25 gebildet. Anschließend wird das flächige Gebilde 20 in die Baugrube 25 eingebracht und teilweise mit Bodenmaterial 21 befüllt. Dieses Bodenmaterial ist in diesem Ausführungsbeispiel Kies, es könnte natürlich ebenso jedes andere Material verwendet werden, wie auch der Aushub der Baugrube 25.

Anschließend wird die Bodenkonstruktion 7 in die Baugrube 25 auf das teilweise befüllte flächige Gebilde 20 aufgebracht. Die Enden des flächigen Gebildes 20 werden über die Bodenkonstruktion 7 geschlagen, somit trägt das Bodenmaterial 21, das sich unter der Bodenkonstruktion 7 befindet ebenso zur sicheren Verankerung der Bodenkonstruktion 7 bei. Anschließend wird die Baugrube 25 mit Bodenmaterial 21 befüllt. Auch hier ist natürlich jedes andere Material zum Befüllen der Baugrube 25 vorstellbar.

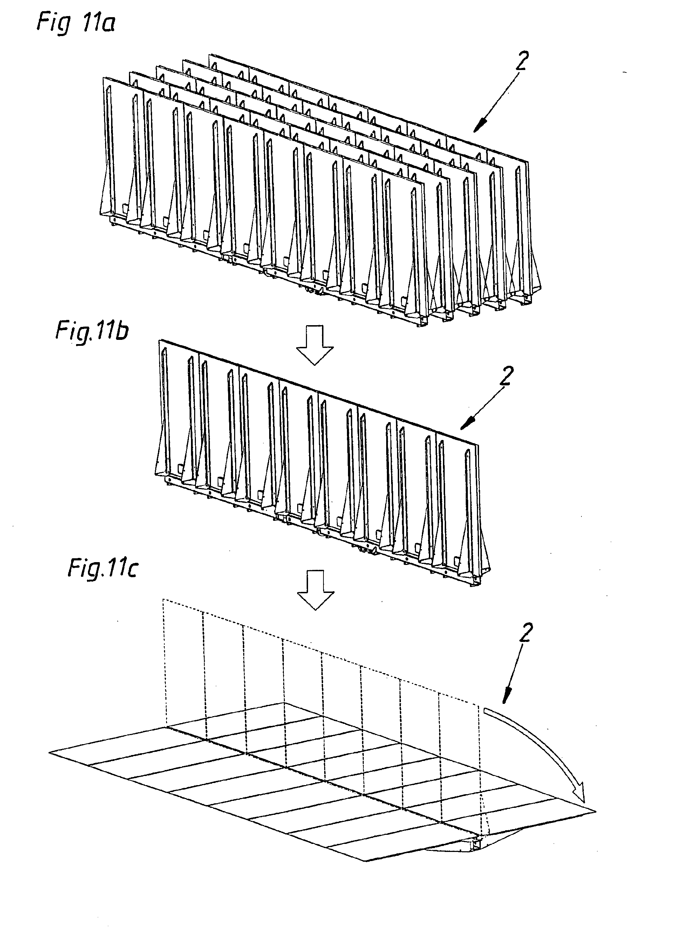

Nach erfolgter Verankerung der Bodenkonstruktion 7 und somit der Tragekonstruktion 4 am Aufstellungsort kann anschließend die Photovoltaik-Einheit 2, wie in Figur 11a bis 11c dargestellt, aus einem Transportmittel entladen und aufgestellt werden.

Figur 11a zeigt dabei fünf nebeneinander aufgestellte und zusammengeklappte Photovoltaik-Einheiten 2, die sich zum Beispiel auf einem LKW befinden (nicht dargestellt). Von diesem wird nun eine entnommen (wie in Figur 11b dargestellt) und an ihrem Bestimmungsort auseinandergeklappt (wie in Figur 11c dargestellt).

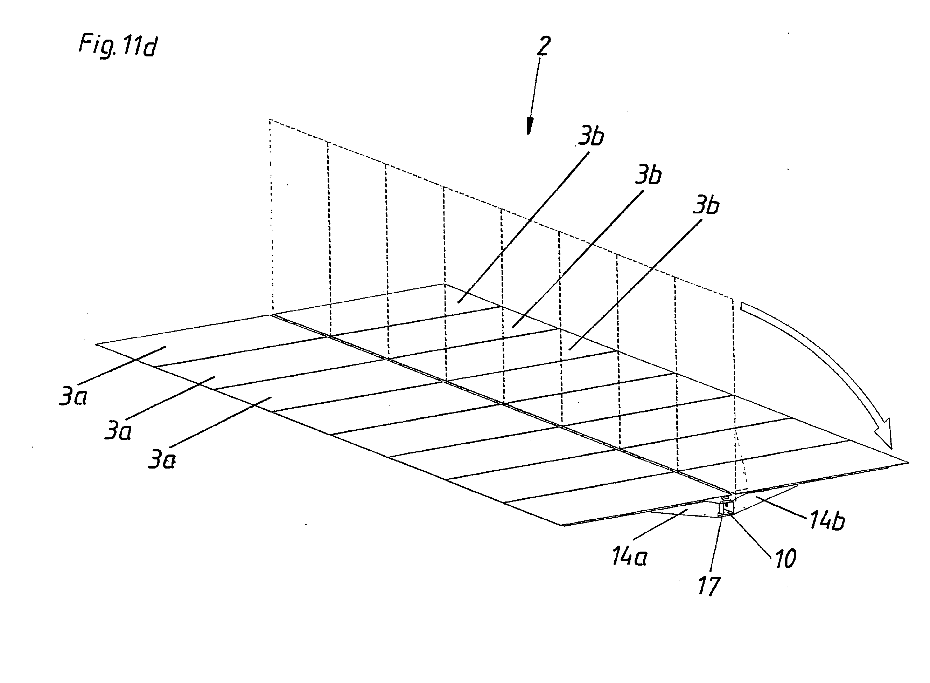

Figur 11d zeigt eine auseinander geklappte Photovoltaik-Einheit 2, bestehend aus sechzehn Photovoltaik-Paneelen 3a und 3b (zwecks der Übersichtlichkeit wurden nur sechs der sechzehn Paneele gekennzeichnet). Die Paneele 3a, 3b sind dabei über Haltevorrichtungen 14a und 14b schwenkbar am Träger 10 befestigt. Durch das Ausschwenken der Photovoltaik-Paneele 3a, 3b werden diese automatisch in die richtige Position gebracht, da die Haltevorrichtungen 14a und 14b ein Anschlagelement 15 (nicht dargestellt) aufweisen. In dieser ausgeklappten Stellung sind die Haltevorrichtungen 14a und 14b und mit ihnen die vorzugsweise durch Verklebung verbundenen Photovoltaik-Paneele 3a und 3b mittels der Arretiervorrichtung 17 in ihrer Position fixierbar. Somit wird gewährleistet, dass auch bei widrigen Witterungsverhältnissen, wie etwa einem Sturm, die Photovoltaik-Paneele 3a, 3b in ihrer Position unveränderbar sind. Das erstmalige Auseinanderklappen der Photovoltaik-Einheit 2 findet normalerweise montiert an der Tragekonstruktion 4 (nicht dargestellt) statt, da dies zu einem vereinfachten Arbeitsablauf beiträgt.

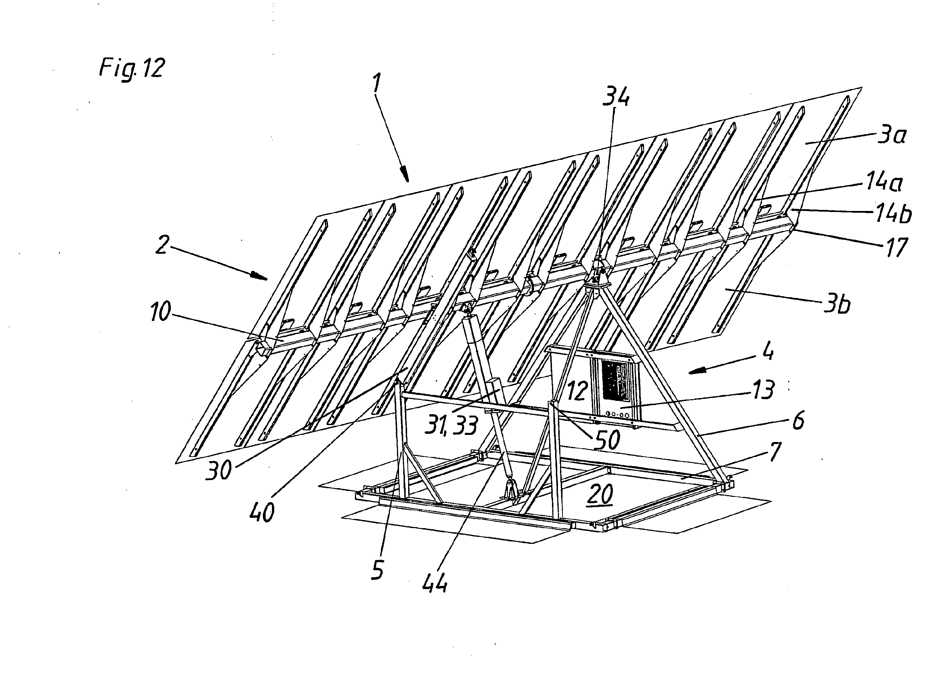

Figur 12 zeigt eine Photovoltaik-Anlage 1, die eine Photovoltaik-Einheit 2 und eine Tragekonstruktion 4 aufweist. Des Weiteren ist ein Trageteil 30, eine Antriebsvorrichtung 31 und ein 3D-Gelenklager 34 zwischen der Photovoltaik-Einheit 2 und der Tragekonstruktion 4 angeordnet, die zum Verstellen bzw. Verschwenken der Photovoltaik-Einheit 2, um dem Stand der Sonne zu folgen, dienen. Am Steher 6 ist die Anschluss- und Steuerungsvorrichtung 12 als auch der Wechselrichter 13 angeordnet. Somit kann diese Photovoltaik-Anlage 1 als "Stand-alone Photovoltaik-Kraftwerk" dienen. Am Steher 6 befindet sich das 3D-Gelenklager 34, über das unter anderem die Photovoltaik-Einheit 2 geschwenkt wird. Die Verstelleinrichtungen 32 und 42 (nicht dargestellt) für die Photovoltaik-Einheit 2 ergeben sich dabei aus dem 3D-Gelenklager 34 und den Koppelelementen 40 und 50 am Steher 5 und den Koppelelementen 39 und 49 am Trageteil 30 (nicht dargestellt, siehe dazu Figur 18a und Figur 18b).

In einem bevorzugten Ausführungsbeispiel wird bei der Aufstellung der Photovoltaik-Anlage 1 zuerst die Tragekonstruktion 4 aufgestellt und auseinandergeklappt. Anschließend wird die Tragekonstruktion 4 ausgerichtet und im Boden verankert. Danach wird das 3D-Gelenklager 34 am Steher 6 montiert. Nun kann die Photovoltaik-Einheit 2 auf der Tragekonstruktion 4 angebracht und am Trageteil 30 und am 3D-Gelenklager 34 befestigt werden. Anschließend kann die Antriebsvorrichtung 31 mit dem Träger 10 der Photovoltaik-Einheit 2 verbunden werden.

Die Antriebsvorrichtung 31 ist mit einem Antrieb 33 ausgestattet, der in dieser Ausführung eine Kolben-Zylinder-Einheit 44 aufweist. Mit dieser, vorzugsweise einen, Antriebsvorrichtung 31 kann sowohl die einachsige Verstelleinrichtung 32 als auch die einachsige Verstelleinrichtung 42 betätigt werden.

Die Bodenkonstruktion 7 der Tragekonstruktion 4 weist hier ein flexibles flächiges Gebilde 20 auf, mit dem die Photovoltaik-Anlage 1 im Boden verankert werden kann.

Die Photovoltaik-Einheit 2 besteht in diesem Ausführungsbeispiel aus acht Photovoltaik-Paneelen 3a und gleichen acht Photovoltaik-Paneelen 3b, die im Wesentlichen symmetrisch an einem Träger 10 schwenkbar angeordnet sind. Die Photovoltaik-Paneele 3a und 3b weisen Haltevorrichtungen 14a und 14b auf, über die die Photovoltaik-Paneele 3a und 3b am Träger 10 verschwenkt werden können. Durch die Arretiervorrichtungen 17 können die Photovoltaik-Paneele 3a, 3b in ihrer aufgeklappten Position fixiert werden.

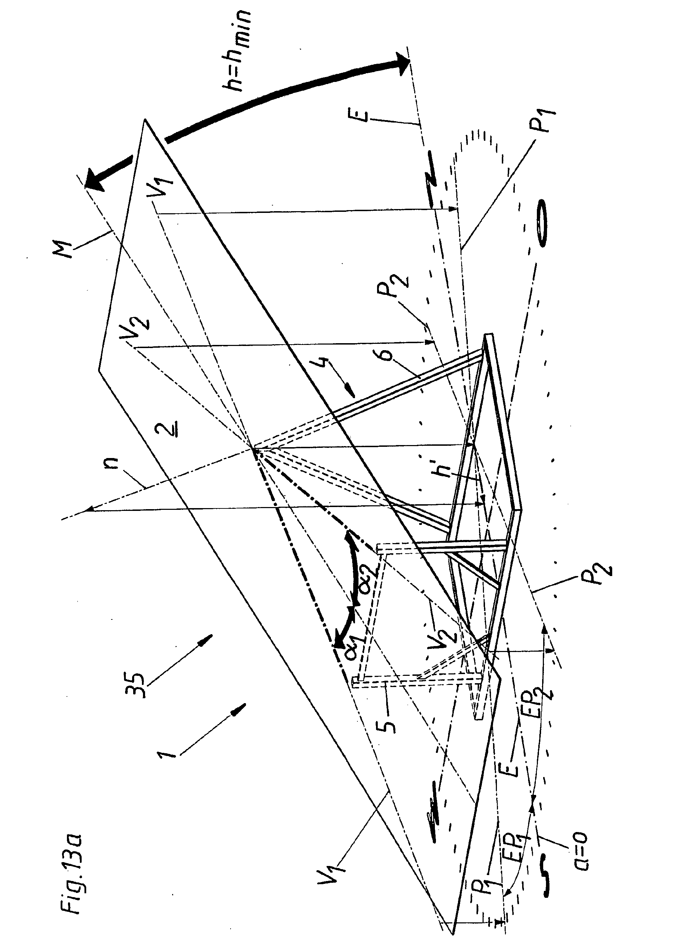

Figur 13a zeigt die schematische Darstellung einer Photovoltaik-Anlage 1 einer Photovoltaik-Einheit 2 auf einer Tragekonstruktion 4.

Im Allgemeinen werden Photovoltaik-Anlagen 1 so aufgestellt, dass die Aufnahmefläche der Photovoltaik-Einheit 2 nach Süden ausgerichtet ist. In der Solartechnik wird die Abweichung des Sonnenkollektors von Süden als Azimut a bezeichnet. Ostausrichtung bedeutet minus 90°, Südost-Ausrichtung bedeutet minus 45°, Südausrichtung entspricht 0°, plus 45° ist Südwestausrichtung und Westausrichtung bedeutet plus 90° des Kollektors.

In Figur 13a befindet sich die Photovoltaik-Einheit 2 dabei in ihrer Einrichtposition 35, welche so gewählt ist, dass die Photovoltaik-Einheit 2 im Wesentlichen nach Süden ausgerichtet ist und somit einen Azimut a=0 aufweist. In dieser Position (Einrichtposition 35) weist die Photovoltaik-Einheit 2 ihren idealen Neigungswinkel auf. Der Neigungswinkel wird als Elevation h in der Photovoltaik-Technik bezeichnet, es ist also jener Winkel, den die Aufnahmefläche der Photovoltaik-Einheit 2 mit der horizontalen Ebene bildet. Dieser ergibt sich aus den unterschiedlichen Höhen der beiden Steher 5 und 6 und den Abstand der beiden Steher 5, 6 zueinander. In der Einrichtposition 35 weist die Photovoltaik-Anlage 1 also vorzugsweise einen Azimut a=0 und eine ideale Elevation hₘᵢₙ - also den idealen Neigungswinkel zur Sonne - auf.

Im Folgenden werden die verschiedenen Achsen und die unter den Achsen auftretenden Winkel erklärt, auf die dazugehörigen Verstelleinrichtungen und anderen Komponenten wird dabei nicht eingegangen und auch nicht dargestellt:

Die Verstellachse V₁ der Verstelleinrichtung 32 verläuft im Wesentlichen in der Ebene der Photovoltaik-Einheit 2. Diese weicht von der gedachten Mittelachse M der Photovoltaik-Einheit 2 ab und bildet zu ihr einen Winkel α₁. Die Projektion der Verstellachse V₁ auf die horizontale Ebene bildet die projizierte Verstellachse P₁. Die Projektion der Flächenormale n der Photovoltaik-Einheit 2 auf die horizontale Ebene ergibt die projizierte Flächennormale n'. Die Verlängerung der projizierten Flächennormalen n' bildet die Einrichtachse E wenn sich die Photovoltaik-Einheit 2 in der Einrichtposition 35, wie hier dargestellt, befindet. Die projizierte Verstellachse P₁ bildet einen Winkel EP₁ zu der Einrichtachse E. Der Winkel EP₁ ist somit der auf die horizontale Ebene 1 projizierte Winkel α₁.

Die Verstellachse V₂ der Verstelleinrichtung 42 verläuft im Wesentlichen in der Ebene der Photovoltaik-Einheit 2. Diese weicht von der gedachten Mittelachse M in der Photovoltaik-Einheit 2 ab und bildet zu ihr einen Winkel α₂. Die Projektion der Verstellachse V₂ auf die horizontale Ebene bildet die projizierte Verstellachse P₂. Die Projektion der Flächenormale n der Photovoltaik-Einheit 2 auf die horizontale Ebene ergibt die projizierte Flächennormale n'. Die Verlängerung der projizierten Flächennormalen n' bildet die Einrichtachse E. Die projizierte Verstellachse P₂ bildet einen Winkel EP₂ zu der Einrichtachse E. Der Winkel EP₂ ist somit der auf die horizontale Ebene 1 projizierte Winkel α₂.

In einem bevorzugten Ausführungsbeispiel beträgt die Elevation hₘᵢₙ in der Einrichtposition 35 ca. 20°. Der Winkel α₁ bzw. α₂ wird in der Praxis zwischen 20° und 30° gewählt, in einem bevorzugten Ausführungsbeispiel beträgt der Winkel α₁ bzw. α₂ ca. 24°. Abhängig ist dieser Wert von den Dimensionen der Photovoltaik-Anlage 1 und kann somit stark variieren. Ermittelt wurden diese Werte in Modellversuchen, ebenso wäre natürlich auch deren Berechnung möglich.

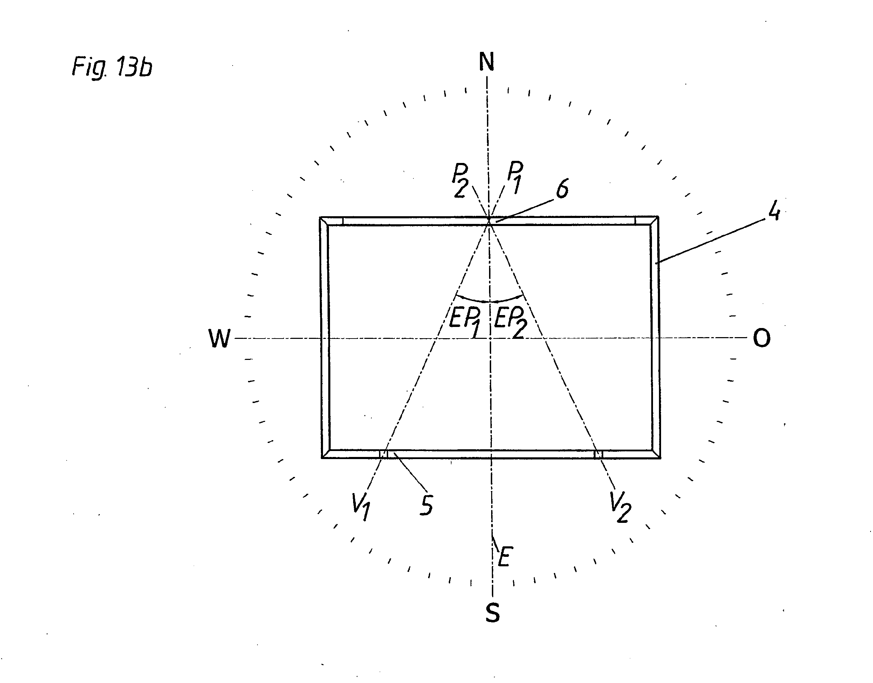

Figur 13b zeigt die Draufsicht auf die Tragekonstruktion 4 einer Photovoltaik-Anlage 1 (nicht dargestellt). Zur besseren Übersicht wurde die Tragekonstruktion 4 nur schematisch dargestellt. Zur besseren Übersicht wurde in dieser Figur die Photovoltaik-Einheit 2 nicht dargestellt, ebenso nicht die Einrichtposition 35 und die beiden Verstelleinrichtungen 32 und 42:

Die Aufstellung der Tragekonstruktion 4 erfolgt dabei in der Regel so, dass die Ausrichtung der Tragekonstruktion 4 so gewählt wird, dass die Einrichtachse E dabei im Wesentlichen einen Nord-Süd-Verlauf aufweist. Gebildet wird die Einrichtachse E durch die Projektion der Flächennormale n der Photovoltaik-Einheit 2 auf die horizontale Ebene (in der Einrichtposition 35 der Photovoltaik-Einheit 2, die dann auftritt, wenn die Photovoltaik-Einheit 2 eine ideale Elevation hₘᵢₙ aufweist). Diese Einrichtposition 35 tritt in diesem Ausführungsbeispiel dann auf, wenn die Photovoltaik-Einheit 2 in beiden Verstelleinrichtungen 32 und 42 ruht. Dabei ist die Vorderkante der Photovoltaik-Einheit 2 im Wesentlichen normal zur Südrichtung ausgebildet und verläuft im Wesentlichen parallel zur horizontalen Ebene.

Die Projektion der Verstellachse V₁ auf die horizontale Ebene bildet die projizierte Verstellachse P₁. Diese projizierte Verstellachse P₁ befindet sich in der gleichen Ebene wie die Einrichtachse E und sie verläuft jedoch weder in der Einrichtachse E noch parallel zu ihr, sie schneidet die Einrichtachse E und bildet mit ihr einen Winkel EP₁, welcher in einem bevorzugten Ausführungsbeispiel zwischen 20° und 30°, liegt.

Die Projektion der Verstellachse V₂ auf die horizontale Ebene bildet die projizierte Verstellachse P₂. Diese projizierte Verstellachse P₂ befindet sich in der gleichen Ebene wie die Einrichtachse E und sie verläuft jedoch weder in der Einrichtachse E noch parallel zu ihr, sie schneidet die Einrichtachse E und bildet mit ihr einen Winkel EP₂, welcher in einem bevorzugten Ausführungsbeispiel zwischen 20° und 30°, liegt.

Die beiden Verstellachsen V₁ und V₂ befinden sich in einem bevorzugten Ausführungsbeispiel im Wesentlichen in einer Ebene, vorzugsweise im Wesentlichen in oder parallel zur Ebene der Aufnahmefläche der Photovoltaik-Einheit 2. Dadurch erfolgt die Verschwenkung über die beiden Verstellachsen V₁ und V₂ symmetrisch zur Einrichtposition 35 und damit symmetrisch zur Einrichtachse E.

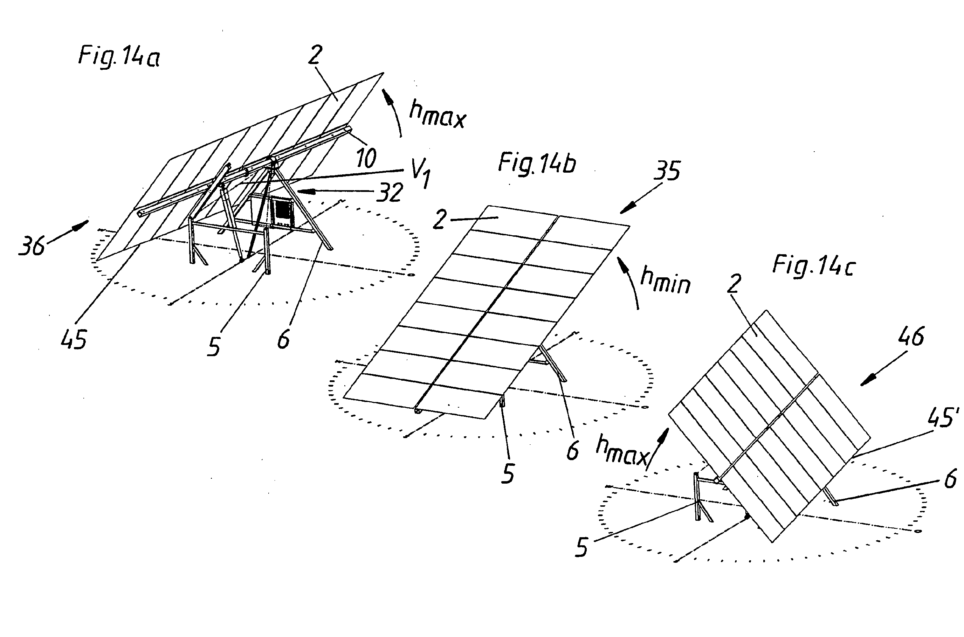

Figur 14a zeigt die Verschwenkung über die Verstellachse V₁ der Verstelleinrichtung 32. Die Verschwenkung der Photovoltaik-Einheit 2 erfolgte dabei ausgehend von der Einrichtposition 35, wo die Photovoltaik-Einheit 2 eine ideale Elevation hₘᵢₙ aufweist (Figur 14b). Nach der maximalen Verschwenkung weist die Photovoltaik-Einheit 2 die Endposition 36 mit maximaler Elevation hₘₐₓ auf. Die Seitenkante 45 der Photovoltaik-Einheit 2 ist in der Endposition 36 im Wesentlichen parallel zur horizontalen Ebene.

Figur 14c zeigt eine Verschwenkung über die Verstellachse V₂ (nicht dargestellt), wobei die Photovoltaik-Einheit 2 die maximale Elevation hₘₐₓ in der Endposition 46 aufweist. Die Seitenkante 45' der Photovoltaik-Einheit 2 ist dabei im Wesentlichen parallel zur horizontalen Ebene.

Verschwenkung über die Verstellachse V₁ (nach Westen Figur 14a):
Ausgehend von der Einrichtposition 35 (Figur 14b), in der sich die Photovoltaik-Einheit 2 in der Position befindet, in der sie die ideale Elevation hₘᵢₙ aufweist, wird die Photovoltaik-Einheit 2 um die Verstellachse V₁ geschwenkt.

Der Wert des Winkels EP₁ hängt unter anderem von den folgenden Faktoren ab:
Der Größe und der Form der Photovoltaik-Einheit 2, dem Abstand der Schwenkpunkte an der Verstellachse V₁ vom Boden und wie weit die Schwenkpunkte der Verstellachse V₁ von den Rändern 45 der Photovoltaik-Einheit 2 und deren Mitte beabstandet sind.

Je näher ein Schwenkpunkt der Verstellachse V₁ zum Seitenrand 45, 45' hin der Photovoltaik-Einheit 2 angeordnet ist, desto weniger nähert sich eine gekippte Photovoltaik-Einheit 2 an diesem Punkt dem Boden, je weiter weg ein Schwenkpunkt der Verstellachse V₁ vom Rand 45 der Photovoltaik-Einheit 2 weg ist, umso mehr nähert sich eine gekippte Photovoltaik-Einheit 2 diesem Punkt.

Ausgehend davon, dass man bei einer maximal zu erzielenden Verschwenkung der Photovoltaik-Einheit 2 eine Endposition 36 mit der Photovoltaik-Einheit 2 erreicht, ist es in einem bevorzugten Ausführungsbeispiel vorgesehen, dass dabei die bodennahe Seite 45 der Photovoltaik-Einheit 2 im Wesentlichen parallel zum Boden verläuft und einen bevorzugten Abstand von etwa einem halben Meter zum Boden dabei aufweist. Daraus ergäbe sich aus den Abmessungen der Photovoltaik-Einheit 2 und der geplanten maximalen Elevation hₘₐₓ (welche in der Endposition 36 erreicht wird) die Schwenkpunkte für die Verstellachse V₁ der Tragekonstruktion 4 bzw. der Verstelleinrichtung 32. Aus diesen Punkten ergibt sich dann auch der Winkel EP₁ (Winkel zwischen Projektion der Verstellachse V₁ auf die horizontale Ebene und der Einrlchtachse E).

Ein Anschauungsbeispiel: Bei einer gewünschten Höhe von 1 m (und ebenso geplantem Schwenkpunkt der Photovoltaik-Einheit 2 auf derselben Höhe) des Stehers 5 und einer geplanten Höhe der Seitenkante 45, 45' der Photovoltaik-Einheit 2 bei maximal gekippten Zustand über dem Erdboden von einem halben Meter ist ein Schwenkpunkt der Verstellachse V₁ etwa einen halben Meter innerhalb der Seitenkante 45 der Photovoltaik-Einheit 2 anzuordnen. Der zweite Schwenkpunkt an der Verstellachse V₁ ist näher zur Mitte hin (am besten im Bereich der Mitte) auf dem gegenüber dem Steher 5 erhöhten Steher 6 anzuordnen, wodurch der Effekt zustande kommt, dass das Verschwenken der Photovoltaik-Einheit 2 über den Schwenkpunkt am Steher 5 einen geringeren Verschwenkweg der Photovoltaik-Einheit 2 gegenüber dem Boden bewirkt und die Verschwenkung der Photovoltaik-Einheit 2 über den Schwenkpunkt am Steher 6 einen größeren Verschwenkweg bewirkt, was dazu führt, dass die Seitenkante 45 der Photovoltaik-Einheit 2 unterschiedlich lange Wege in Richtung Boden ausführt.

Somit wird auch der Vorteil und auch der technische Effekt dieser versetzten Verstellachse V₁ deutlich. Dadurch, dass die Verschwenkung der Photovoltaik-Einheit 2 um die Verstellachse V₁ nicht symmetrisch erfolgt, tritt der gewünschte Effekt ein, dass sich die Photovoltaik-Einheit 2 - die eine Neigung (Elevation h) aufweist und somit in einem Bereich dem Erdboden näher ist - bei der Verschwenkung in dem Bereich, der sich näher am Erdboden befindet sie sich weniger dem Boden nähert, als sie es bei einer Verschwenkung um eine Verstellachse täte, die entlang, parallel oder in der Nähe der Einrichtachse E bzw. der gedachten Mittelachse M der Photovoltaik-Einheit 2 läge (wie etwa bei einer Photovoltaik-Anlage, bei der die Verstellachse entlang des Trägers 10 verlaufen würde).

Dem Stand der Technik nach - übertragen auf dieses Ausführungsbeispiel - würde die projizierte Verstellachse P₁ in der Einrichtachse E verlaufen und bei gleicher Ausführung der Höhen der Steher 5 und 6 würde eine Verschwenkung der Photovoltaik-Einheit 2 diese bereits bei einer geringeren Verschwenkung im vorderen Bereich Bodenkontakt auftreten. Somit müsste, um die gleiche Elevation h zu erreichen, entweder die Form der Photovoltaik-Einheit 2 im vorderen Bereich geändert (geschmälert) werden, was zu einer geringeren Leistungsausbeute führen würde - oder die Ständer 5 und 6 müssten höher ausgeführt werden, was die Photovoltaik-Anlage für Umwelteinflüsse (Sturm) anfälliger machen würde.

Verschwenkung über die Verstellachse V₂(nach Osten Figur 14c):
Um eine auf diese Weise bevorzugte Art der Verschwenkung auch nach Osten zu erreichen, ist eine zweite Verstellachse V₂ vorgesehen, die vorzugsweise spiegelbildlich angeordnet ist. Die Verschwenkung über die Verstellachse V₂ verläuft sinngemäß gleich wie bei der Verstellachse V₁ beschrieben und mit den sinngemäß gleichen Effekten.

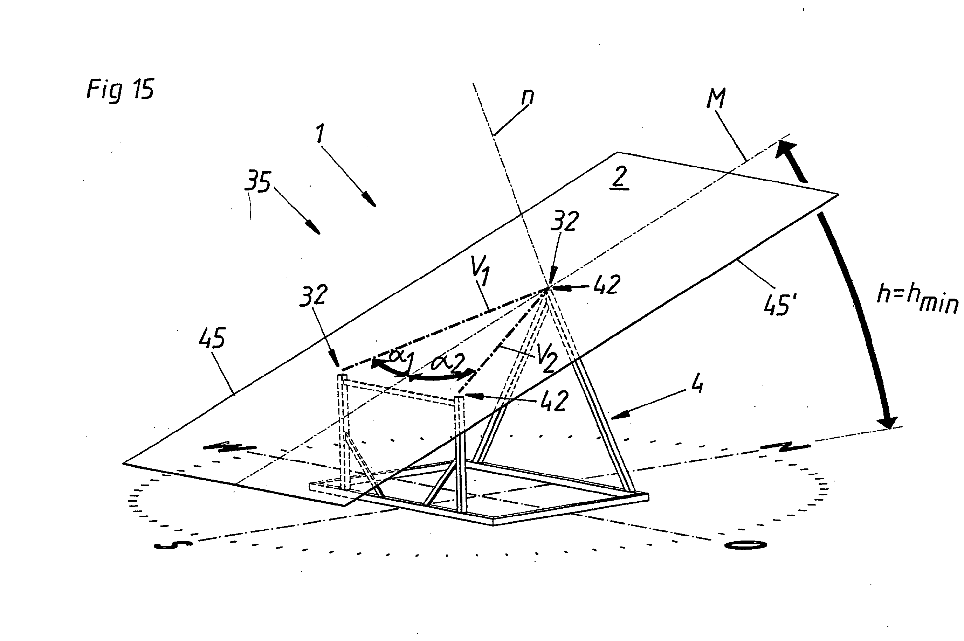

Figur 15 zeigt die schematische Darstellung einer Photovoltaik-Anlage 1 mit einer Photovoltaik-Einheit 2 und einer Tragekonstruktion 4. Die Photovoltaik-Anlage 1 weist dabei zwei Verstelleinrichtungen 32 und 42 auf, über die die Photovoltaik-Einheit 2 gekippt werden kann. Durch die Verstelleinrichtung 32 wird die Verstellachse V₁ gebildet. Durch die Verstelleinrichtung 42 wird die Verstellachse V₂ gebildet. Diese Verstellachsen V₁ und V₂ bilden jeweils einen Winkel α₁, α₂ zu einer gedachten Mittelachse M der Photovoltaik-Einheit 2. Die Photovoltaik-Einheit 2 befindet sich in diesem Ausführungsbeispiel in ihrer Einrichtposition 35, die dann gegeben ist, wenn die Photovoltaik-Einheit 2 die in Bezug auf die Sonne ideale Elevation hₘᵢₙ aufweist. Normalerweise, wie auch in diesem Beispiel gezeigt, befindet sich die Photovoltaik-Anlage 1 in der Einrichtposition 35, welche als Grundstellung zu betrachten ist und normalerweise so gewählt wird, dass diese dann vorliegt, wenn die Photovoltaik-Anlage 1 in Nord-Süd-Richtung, genaugenommen die Photovoltaik-Einheit 2, ausgerichtet ist, dabei weist sie einen Azimut a=0 auf (laut Definition). Die Seitenkanten 45, 45' der Photovoltaik-Einheit 2 sind dabei im Winkel der Elevation hₘᵢₙ zur horizontalen Ebene geneigt.

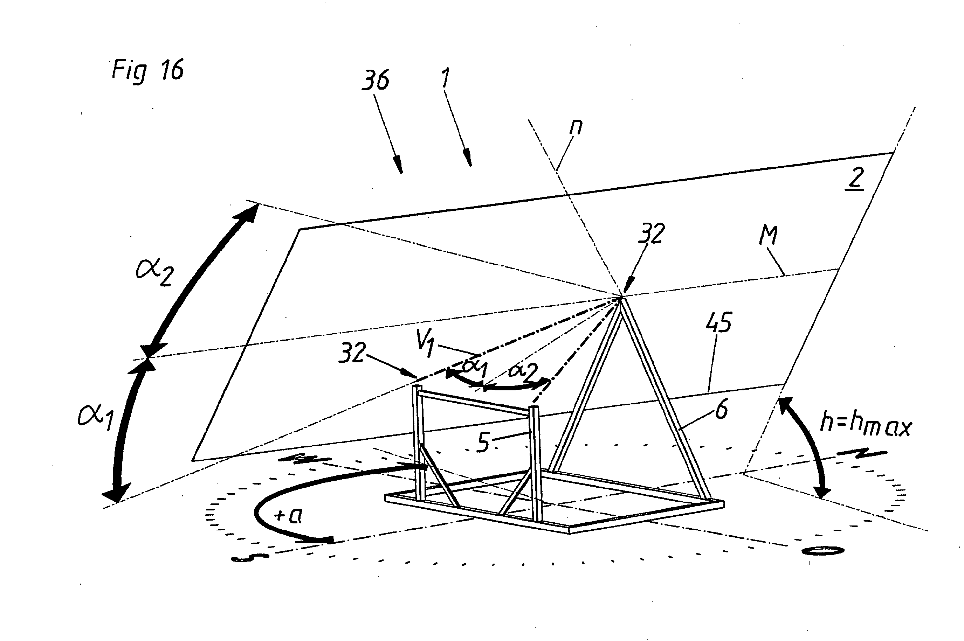

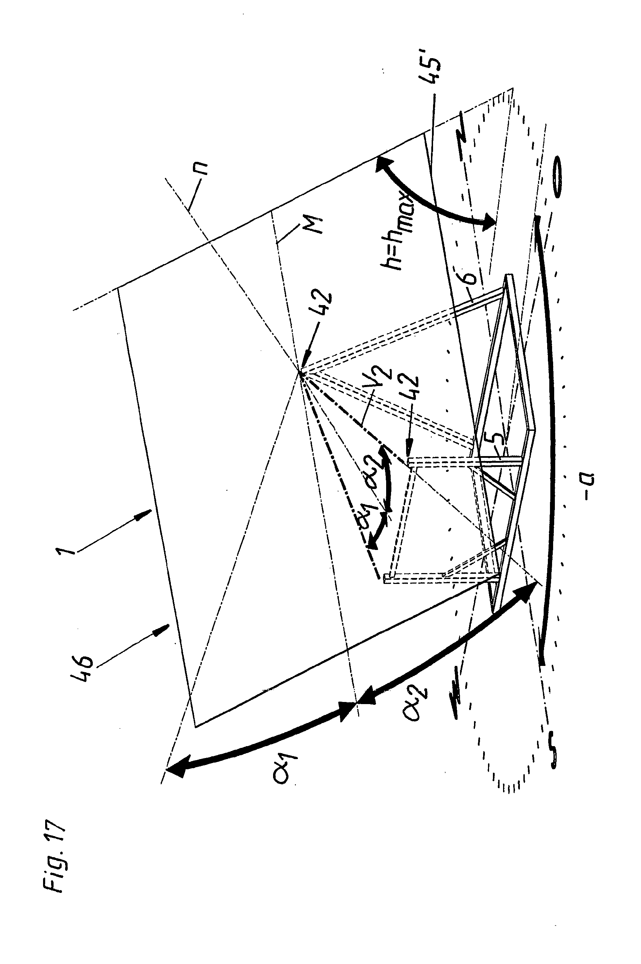

Eine Verschwenkung der Photovoltaik-Einheit 2 über die Verstellachse V₁ bewirkt, wie in diesem Beispiel dargestellt, eine Verschwenkung der Photovoltaik-Einheit 2 nach Westen (siehe Figur 16). Eine Verschwenkung über die Verstellachse V₂ bewirkt eine Verschwenkung der Photovoltaik-Einheit 2 nach Osten (siehe Figur 17).

Figur 16 zeigt eine Photovoltaik-Anlage 1, bei der die Photovoltaik-Einheit 2 sich in ihrer Endposition 36 befindet. Erreicht hat sie diese Endposition 36 durch ein Verschwenken über die Verstellachse V₁ der Verstelleinrichtung 32 nach Westen. In dieser Position weist die Photovoltaik-Einheit 2 die maximale Elevation hₘₐₓ und einen maximalen positiven Azimut a auf. Aufgrund dessen, dass sich die Verstellachse V₁ nicht parallel zur oder in der gedachten Mittelachse M der Photovoltaik-Einheit 2 befindet sondern mit dieser einen Winkel α₁ bildet, erfolgt die Verschwenkung im hinteren Bereich, über den Steher 6, in bei weitem größerem Maße als im vorderen Bereich, über den Steher 5. Dadurch weist nun die Photovoltaik-Einheit 2 in ihrer Endposition 36 eine Seitenkante 45 auf, die im Wesentlichen parallel zur horizontalen Ebene verläuft.

Figur 17 zeigt eine Photovoltaik-Anlage 1, bei der die Photovoltaik-Einheit 2 über die Verstellachse V₂ der Verstelleinrichtung 42 nach Osten verschwenkt wurde. Die Photovoltaik-Einheit 2 befindet sich hier nun in ihrer Endposition 46, bei der sie die maximale Elevation hₘₐₓ und einen maximalen negativen Azimut -a aufweist. Aufgrund dessen, dass sich die Verstellachse V₂ nicht parallel zur oder in der gedachten Mittelachse M der Photovoltaik-Einheit 2 befindet sondern mit dieser einen Winkel α₂ bildet, erfolgt die Verschwenkung im hinteren Bereich, über den Steher 6, in bei weitem größerem Maße als im vorderen Bereich, über den Steher 5. Dadurch weist nun die Photovoltaik-Einheit 2 in ihrer Endposition 46 eine Seitenkante 45' auf, die im Wesentlichen parallel zur horizontalen Ebene verläuft.

Figur 18a zeigt das Trageteil 30, welches Befestigungsstellen für die vorzugsweise flächig ausgebildete Photovoltaik-Einheit 2 aufweist (nicht dargestellt). Ein Teil der Verstelleinrichtung 32, welche am Steher 5 sich befindet, weist hier ein Koppelelement 40 der Koppelvorrichtung 41 auf. Der Trageteil 30 weist ein Koppelelement 39 der Koppelvorrichtung 41 auf. Die beiden Koppelelemente 39 und 40 sind hierbei eine Verbindung eingegangen und werden durch die Verriegelungsvorrichtung 43 verriegelt und können somit nicht voneinander getrennt werden. Sie können jedoch zueinander verdreht werden, somit kann eine Verschwenkung über die Verstelleinrichtung 32 und über die beiden Koppelelemente 39 und 40 erfolgen. Am anderen Ende des Trageteils 30 ist das Koppelelement 49 angeordnet, welches zu diesem Zeitpunkt nicht mit dem Koppelelement 50 des Stehers 5 gekoppelt ist (nicht dargestellt).

In Figur 18b ist die Verstellung für die Verstelleinrichtung 42 dargestellt, wobei die beiden Koppelelemente 49 und 50 der Koppelvorrichtung 41 in Verbindung stehen und durch die Verriegelungsvorrichtung 43 verriegelt worden sind. Am anderen Ende des Trageteils 30 ist das Koppelelement 39 angeordnet, dabei ist erkennbar, dass zu diesem Zeitpunkt die Verriegelungsvorrichtung 43 nicht in den Bereich des Koppelelements 39 ragt.

Die Verriegelung durch die Verriegelungsvorrichtung 43 erfolgt immer nur auf einer Seite des Trageteils, das heißt, es kann immer nur eine Verschwenkung über die Verstelleinrichtung 32 oder über die Verstelleinrichtung 42 erfolgen.

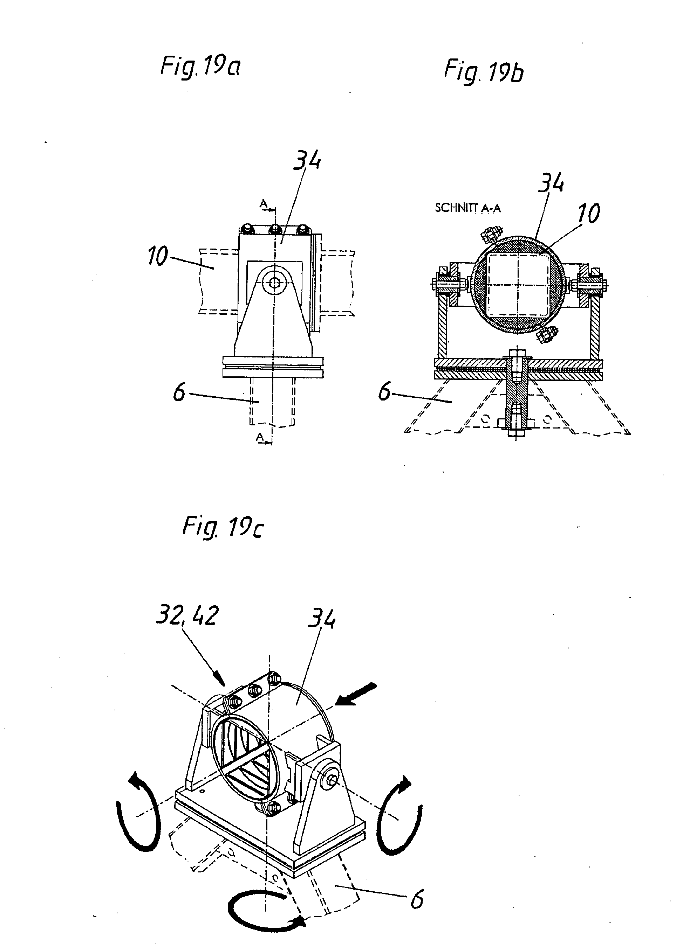

Figur 19a bis 19c zeigt ein 3D- Gelenklager über das der Träger 10 und somit die Photovoltaik-Einheit 2 (nicht dargestellt) mittels der Verstelleinrichtungen 32 und 42 verschwenkt werden kann.

Dieses dreidimensional schwenkbare, wartungsfreie Lager dient zur formschlüssigen Aufnahme des Trägers 10, der als Trägerteil der Photovoltaik-Einheit 2 gemäß der Sonnenlaufbahn in verschiedene Positionen nachgeführt wird. In diesem Ausführungsbeispiel besteht das Lager 34 aus feuerverzinkten, geschweißten und verschraubten Stahlteilen und wird durch Sinterbronzebuchsen und POM-Kunststoffen in Verbindung mit Edelstahlbolzen geführt. An der ersten Drehachse wird der Träger 10 durch vier Lagerschalen aus POM formschlüssig aufgenommen und drehend gelagert. Die auftretenden axialen Kräfte werden durch einen am Träger 10 aufgeschweißten Flansch und zwischen Träger 10 und Lager 34 angeordneten POM Scheiben aufgenommen. Das 3D-Gelenklager 34 ist zweiteilig und wird zur Montage am Träger 10 verschraubt und die Lagerschalen eingelegt. An der zweiten Drehachse findet die Schwenkbewegung über zwei Bundbuchsen aus Sinterbronze statt. Die Bundbuchsen sind in den aufgeschweißten Lagerböcken eingepresst und das 3D-Gelenklager 34 wird durch Edelstahlbolzen und Scheiben mit ausreichendem axialem Spiel aufgenommen.

Die Drehbewegung der dritten Achse erfolgt über einen Führungsbolzen aus Edelstahl der gleichzeitig als Verbindung zwischen 3D-Lager 34 und Tragekonstruktion 4 (hier der Steher 6 der Tragekonstruktion 4) dient. Als Gleitlager wirken zwei POM Scheiben, die zwischen den Flanschplatten vom 3D-Lager 34 und dem Steher 6 eingelegt sind.

Wenn auch die Erfindung anhand des gezeigten Ausführungsbeispiels konkret beschrieben wurde, versteht es sich von selbst, dass der Anmeldungsgegenstand nicht auf dieses Ausführungsbeispiel beschränkt ist. Vielmehr versteht es sich von selbst, dass Maßnahmen und Abwandlungen, die dazu dienen, den Erfindungsgedanken umzusetzen, durchaus denkbar und erwünscht sind.

### Bezugszeichenliste:

- 1: Photovoltaik-Anlage
- 2: Photovoltaik-Einheit
- 3a, 3b: Photovoltaik-Paneel
- 4: Tragekonstruktion
- 5, 6: Steher
- 7: Bodenkonstruktion
- 8a,8b, 8c,8d: Gelenke
- 9a, 9b, 9c, 9d,: Verbindungselemente
- 10: Träger
- 11 a, 11 b: Seitenflächen des Trägers 10
- 12: Anschluss- und Steuerungsvorrichtung
- 13: Wechselrichter
- 14a, 14b: Haltevorrichtung
- 15: Anschlagelement
- 16: Arretiervorrichtung zusammengeklappt
- 17: Arretiervorrichtung auseinandergeklappt
- 18: Bohrung
- 20: flächiges Gebilde
- 21: Bodenmaterial
- 22: Standfläche der Bodenkonstruktion 7
- 23: Grundfläche des flächigen Gebildes 20
- 24a, 24b: Bahnen des flächiges Gebilde 20
- 25: Baugrube
- 30: Trageteil
- 31: Antriebsvorrichtung
- 32, 42: Verstelleinrichtung
- 33: Antrieb der Antriebsvorrichtung 31
- 34: 3D-Gelenklager
- 35: Einrichtposition
- 36,46: Endposition
- 39, 40, 49, 50: Koppelelement
- 41: Koppelvorrichtung
- 43: Verriegelungsvorrichtung
- 44: Kolben-Zylinder-Einheit des Antriebs 33 der Antriebsvorrichtung 31
- 45, 45': Seitenkanten der Photovoltaik-Einheit 2
- a: Azimut
- h: Elevation
- hₘᵢₙ: in Bezug auf die Sonne ideale Elevation
- hₘₐₓ: maximale Elevation
- V₁,V₂: Verstellachsen
- E: Einrichtachse
- P₁, P₂: projizierte Verstellachsen V₁, V₂ auf die horizontale Ebene
- EP₁: Winkel Einrichtachse E zu projizierter Verstellachse P₁
- EP₂: Winkel Einrichtachse E zu projizierter Verstellachse P₂
- α₁: Winkel gedachte Mittelachse der Photovoltaik-Einheit 2 zur Verstellachse V₁
- α₂: Winkel gedachte Mittelachse der Photovoltaik-Einheit 2 zur Verstellachse V₂
- M: gedachte Mittelachse der Photovoltaik-Einheit 2
- n: Flächennormale der Photovoltaik-Einheit 2
- n': projizierte Flächennormale n der Photovoltaik-Einheit 2 auf die horizontale Eber

## Patentansprüche

1. Tragekonstruktion (4) für eine stationäre Photovoltaik-Anlage (1), mit:
- einem Trageteil (30), welches Befestigungsstellen für eine flächig ausgebildete Photovoltaik-Einheit (2) aufweist,
- zumindest einer Antriebsvorrichtung (31) zum angetriebenen Verstellen des Trageteils (30),
- wenigstens einer einachsigen Verstelleinrichtung (32), durch welche eine am Trageteil (30) befestigte Photovoltaik-Einheit (2) in Azimut (a) und Elevation (h) um eine Verstellachse (V₁) zwischen einer Einrichtposition (35) und einer Endposition (36) verstellbar ist, wobei die Projektion der Flächennormalen (n) der Photovoltaik-Einheit (2) auf die horizontale Ebene in der Einrichtposition (35) eine Einrichtachse (E) definiert und die Projektion der Verstellachse (V₁) auf die horizontale Ebene eine projizierte Verstellachse (P₁) definiert,
**dadurch gekennzeichnet, dass** die projizierte Verstellachse (P₁) zur Einrichtachse (E) einen Winkel (EP₁) im Bereich von mehr als 5 Grad und weniger als 80 Grad, vorzugsweise im Bereich von mehr als 10 Grad und weniger als 60 Grad, bildet.

2. Tragekonstruktion nach Anspruch 1, **dadurch gekennzeichnet, dass** eine zweite einachsige Verstelleinrichtung (42) vorgesehen ist, welche auf dieselbe Weise wie die erste Verstelleinrichtung (32) ausgebildet ist, wobei das Trageteil (30) wechselweise mit der ersten Verstelleinrichtung (32) und der zweiten Verstelleinrichtung (42) koppelbar ist und die Verschwenkbereiche der ersten Verstelleinrichtung (32) und der zweiten Verstelleinrichtung (42) in Bezug auf die Einrichtachse (E) spiegelbildlich angeordnet sind.

3. Tragekonstruktion nach Anspruch 2, **dadurch gekennzeichnet, dass** die Antriebsvorrichtung (31) einen gemeinsamen Antrieb (33) für beide Verstelleinrichtungen (32, 42) aufweist.

4. Tragekonstruktion nach Anspruch 3, **dadurch gekennzeichnet, dass** der Antrieb (33) der Antriebsvorrichtung (31) als Linearantrieb ausgebildet ist.

5. Tragekonstruktion nach Anspruch 4, **dadurch gekennzeichnet, dass** der Linearantrieb der Antriebsvorrichtung (31) zumindest eine Kolben-Zylinder-Einheit (44) aufweist.

6. Tragekonstruktion nach einem der Ansprüche 1 bis 5, **dadurch gekennzeichnet, dass** die Tragekonstruktion (4) zumindest ein 3D-Gelenk, vorzugsweise ein 3D-Gelenklager (34), für das Verstellen des Trageteiles (30) aufweist.

7. Tragekonstruktion nach einem der Ansprüche 2 bis 6, **dadurch gekennzeichnet, dass** die Tragekonstruktion (4) eine Koppelvorrichtung (41) mit korrespondierenden Koppelelementen (39, 40, 49, 50) aufweist über die die beiden Verstelleinrichtungen (32, 42) wechselweise mit dem Trageteil (30) koppelbar sind.

8. Tragekonstruktion nach Anspruch 7, **dadurch gekennzeichnet, dass** die Tragekonstruktion (4) eine Verriegelungsvorrichtung (43) aufweist mit der wechselweise die jeweiligen korrespondierenden Koppelelemente (39, 40, 49, 50) der Koppelvorrichtung (41) verriegelbar und entriegelbar sind.

9. Tragekonstruktion nach Anspruch 8, **dadurch gekennzeichnet, dass** die Verriegelungsvorrichtung (43) einen Antrieb, vorzugsweise einen Linearantrieb, aufweist mit dem wechselweise die jeweiligen korrespondierenden Koppelelemente (39, 40, 49, 50) der Koppelvorrichtung (41) verriegelbar und entriegelbar sind.

10. Tragekonstruktion nach einem der Ansprüche 7 bis 9, **dadurch gekennzeichnet, dass** eine Verschwenkung des Trageteils (30) über die erste Verstelleinrichtung (32) eine Abhebung des Trageteils (30) von zumindest einem Koppelelement (50) der zweiten Verstelleinrichtung (42) bewirkt und eine Verschwenkung des Trageteils (30) über die zweite Verstelleinrichtung (42) eine Abhebung des Trageteils (30) von zumindest einem Koppelelement (40) der ersten Verstelleinrichtung (32) bewirkt.

11. Tragekonstruktion nach einem der Ansprüche 7 bis 10, wobei die Tragekonstruktion (4) aufweist:
- wenigstens zwei - vorzugsweise unterschiedlich lange - Steher (5, 6), an denen die beiden Verstelleinrichtungen (32, 42), das 3D-Gelenk und zumindest zwei Koppelelemente (40, 50) der Koppelvorrichtung (41) angeordnet sind,
- eine Anschluss- und Steuerungsvorrichtung (12),
**dadurch gekennzeichnet, dass** an einem Steher (5) zumindest zwei Koppelelemente (40, 50) der Koppelvorrichtung (41) angeordnet sind und / oder an dem anderen Steher (6) die Anschluss- und Steuerungsvorrichtung (12) und/oder das 3D-Gelenk angeordnet ist und/oder ein Steher (6) eine im Wesentlichen dreieckige Form und/oder ein Steher (5) eine im Wesentlichen viereckige Form aufweist und/oder zumindest ein, vorzugsweise beide, Steher (5, 6) zumindest eine Verstrebung aufweist.

12. Tragekonstruktion nach einem der Ansprüche 1 bis 11, **dadurch gekennzeichnet, dass** die zumindest eine Stelle, an der die Antriebsvorrichtung(31) das Trageteil (30) antreibt zu einer Stelle, vorzugsweise von allen Stellen, an der die Verstelleinrichtung (32, 42) das Trageteil (30) verstellt, distanziert ist.

13. Tragekonstruktion (4) nach einem der Ansprüche 1 bis 12, wobei die Tragekonstruktion (4) Befestigungsstellen zur Befestigung der Photovoltaik-Einheit (2) aufweist, **dadurch gekennzeichnet, dass** die Tragekonstruktion (4) flach zusammenlegbar ist.

14. Tragekonstruktion (4) nach einem der Ansprüche 1 bis 13, mit:
- einer Bodenkonstruktion (7), die zumindest teilweise im Boden eingrabbar ist,
- einem im Boden eingrabbaren flächigen Gebilde (20), welches mit der Bodenkonstruktion (7) im Montagezustand so in Verbindung steht, dass die auf das flächige Gebilde (20) durch die Last des Bodenmaterials (21) einwirkenden Kräfte zur sicheren Verankerung der Bodenkonstruktion (7) im Boden auf die Bodenkonstruktion (7) übertragbar sind,
**dadurch gekennzeichnet, dass** das flächige Gebilde (20) flexibel ausgebildet ist.

15. Stationäre Photovoltaik-Anlage (1) mit einer Tragekonstruktion (4) nach einem der Ansprüche 1 bis 14.

## Claims

1. Support structure (4) for a stationary photovoltaic system (1), with:
- a support part (30), which has securing points for a flat photovoltaic unit (2),
- at least one drive device (31) for driven adjustment of the support part (30),
- at least one single-axis adjusting device (32), by means of which a photovoltaic unit (2) fastened on the support part (30) can be adjusted in azimuth (a) and elevation (h) about an adjusting axis (V₁) between a setup position (35) and an end position (36), wherein the projection of the surface normals (n) of the photovoltaic unit (2) on the horizontal plane in the setup position (35) defines a setup axis (E) and the projection of the adjusting axis (V₁) on the horizontal plane defines a projected adjusting axis (P₁),
**characterized in that** the projected adjusting axis (P₁) forms an angle (EP₁) with the setup axis (E) in the range of more than 5 degrees and less than 80 degrees, preferably in the range of more than 10 degrees and less than 60 degrees.

2. Support structure according to claim 1, **characterized in that** a second single-axis adjusting device (42) is provided, which is of the same design as the first adjusting device (32), wherein the support part (30) can be coupled alternately to the first adjusting device (32) and to the second adjusting device (42) and the swivelling ranges of the first adjusting device (32) and of the second adjusting device (42) relative to the setup axis (E) are arranged as mirror images.

3. Support structure according to claim 2, **characterized in that** the drive device (31) has a common drive (33) for both adjusting devices (32, 42).

4. Support structure according to claim 3, **characterized in that** the drive (33) of the drive device (31) is a linear drive.

5. Support structure according to claim 4, **characterized in that** the linear drive of the drive device (31) has at least one piston-cylinder unit (44).

6. Support structure according to one of claims 1 to 5, **characterized in that** the support structure (4) has at least one 3D-pivot joint, preferably a 3D-pivot bearing (34), for adjusting the support part (30).

7. Support structure according to one of claims 2 to 6, **characterized in that** the support structure (4) has a coupling device (41) with corresponding coupling elements (39, 40, 49, 50) by means of which the two adjusting devices (32, 42) can be coupled alternately to the support part (30).

8. Support structure according to claim 7, **characterized in that** the support structure (4) has a locking device (43), with which the respective corresponding coupling elements (39, 40, 49, 50) of the coupling device (41) can be locked and unlocked alternately.

9. Support structure according to claim 8, **characterized in that** the locking device (43) has a drive, preferably a linear drive, with which the respective corresponding coupling elements (39, 40, 49, 50) of the coupling device (41) can be locked and unlocked alternately.

10. Support structure according to one of claims 7 to 9, **characterized in that** a swivelling of the support part (30) by means of the first adjusting device (32) causes a raising of the support part (30) of at least one coupling element (50) of the second adjusting device (42) and a swivelling of the support part (30) by means of the second adjusting device (42) causes a raising of the support part (30) of at least one coupling element (40) of the first adjusting device (32).

11. Support structure according to one of claims 7 to 10, wherein the support structure (4) has:
- at least two uprights (5, 6) - preferably of different lengths - on which the two adjusting devices (32, 42), the 3D-pivot joint and at least two coupling elements (40, 50) of the coupling device (41) are arranged,
- a connecting and controlling device (12),
**characterized in that** at least two coupling elements (40, 50) of the coupling device (41) are arranged on one upright (5) and/or the connecting and controlling device (12) and/or the 3D-pivot joint are arranged on the other upright (6) and/or one upright (6) has an essentially triangular shape and/or one upright (5) has an essentially quadrilateral shape and/or at least one, preferably both, uprights (5, 6) have at least one strut.

12. Support structure according to one of claims 1 to 11, **characterized in that** the at least one point at which the drive device (31) drives the support part (30) is at a distance from a point, preferably from all points, at which the adjusting device (32, 42) adjusts the support part (30).

13. Support structure (4) according to one of claims 1 to 12, wherein the support structure (4) has securing points for securing the photovoltaic unit (2), **characterized in that** the support structure (4) can be folded flat.

14. Support structure (4) according to one of claims 1 to 13, with:
- a base structure (7), which can be at least partially embedded into the ground,
- a flat structure (20) that can be embedded into the ground, and which in the assembled state is connected to the base structure (7) in such a way that the forces, for securely anchoring of the base structure (7) in the ground, acting upon the flat structure (20) due to the weight of the base material (21) can be transferred to the base structure (7),
**characterized in that** the flat structure (20) is flexible.

15. Stationary photovoltaic system (1) with a support structure (4) according to one of claims 1 to 14.

## Revendications

1. Construction support (4) pour une installation photovoltaïque stationnaire (1), comportant :
- une partie support (30) qui présente des zones de fixation pour une unité photovoltaïque (2) conçue plane,
- au moins un dispositif d'entraînement (31) pour le réglage motorisé de la partie support (30),
- au moins un dispositif de réglage uniaxe (32) qui permet de régler une unité photovoltaïque (2) fixée à la partie support (30) en azimut (a) et élévation (h) autour d'un axe de réglage (V1) entre une position de mise au point (35) et une position finale (36), dans laquelle la projection de la normale de surface (n) de l'unité photovoltaïque (2) sur le plan horizontal dans la position de mise au point (35) définit un axe de mise au point (E) et la projection de l'axe de réglage (V1) sur le plan horizontal définit un axe de réglage (P1) projeté,
**caractérisée en ce que** l'axe de réglage (P1) projeté forme par rapport à l'axe de mise au point (E) un angle (EP1) dans une plage supérieure à 5 degrés et inférieure à 80 degrés, de préférence dans une plage supérieure à 10 degrés et inférieure à 60 degrés.

2. Construction support selon la revendication 1, **caractérisée en ce qu'**il est prévu un deuxième dispositif de réglage uniaxe (42) qui est conçu de la même manière que le premier dispositif de réglage (32), dans laquelle la partie support (30) peut être couplée en alternance avec le premier dispositif de réglage (32) et avec le deuxième dispositif de réglage (42) et les plages de pivotement du premier dispositif de réglage (32) et du deuxième dispositif de réglage (42) sont disposées en miroir par rapport à l'axe de mise au point (E).

3. Construction support selon la revendication 2, **caractérisée en ce que** le dispositif d'entraînement (31) comprend un entraînement commun (33) pour les deux dispositifs de réglage (32, 42).

4. Construction support selon la revendication 3, **caractérisée en ce que** l'entraînement (33) du dispositif d'entraînement (31) est conçu sous forme d'un entraînement linéaire.

5. Construction support selon la revendication 4, **caractérisée en ce que** l'entraînement linéaire du dispositif d'entraînement (31) comprend au moins une unité de vérin à piston (44).

6. Construction support selon l'une quelconque des revendications 1 à 5, **caractérisée en ce que** la construction support (4) comprend au moins une articulation 3D, de préférence une articulation à rotule 3D (34), pour le réglage de la partie support (30).

7. Construction support selon l'une quelconque des revendications 2 à 6, **caractérisée en ce que** la construction support (4) comprend un dispositif de couplage (41) équipé d'éléments de couplage (39, 40, 49, 50) correspondants qui permettent de coupler les deux dispositifs de réglage (32, 42) en alternance avec la partie support (30).

8. Construction support selon la revendication 7, **caractérisée en ce que** la construction support (4) comprend un dispositif de verrouillage (43) qui permet de verrouiller et de déverrouiller en alternance les éléments de couplage (39, 40, 49, 50) correspondants respectifs du dispositif de couplage (41).

9. Construction support selon la revendication 8, **caractérisée en ce que** le dispositif de verrouillage (43) comprend un entraînement, de préférence un entraînement linéaire, qui permet de verrouiller et de déverrouiller en alternance les éléments de couplage (39, 40, 49, 50) correspondants respectifs du dispositif de couplage (41).

10. Construction support selon l'une quelconque des revendications précédentes 7 à 9, **caractérisé en ce qu'**un pivotement de la partie support (30) par le biais du premier dispositif de réglage (32) provoque un soulèvement de la partie support (30) d'au moins un élément de couplage (50) du deuxième dispositif de réglage (42) et un pivotement de la partie support (30) par le biais du deuxième dispositif de réglage (42) provoque un soulèvement de la partie support (30) d'au moins un élément de couplage (40) du premier dispositif de réglage (32).

11. Construction support selon l'une quelconque des revendications 7 à 10, dans laquelle la construction support (4) comprend :
- au moins deux montants (5, 6) - de préférence de longueur différente - sur lesquels sont disposés les deux dispositifs de réglage (32, 42), l'articulation 3D et au moins deux éléments de couplage (40, 50) du dispositif de couplage (41),
- un dispositif de branchement et de commande (12),
**caractérisée en ce qu'**au moins deux éléments de couplage (40, 50) du dispositif de couplage (41) sont disposés sur un montant (5) et/ou le dispositif de branchement et de commande (12) et/ou l'articulation 3D sont disposés sur l'autre montant (6) et/ou un montant (6) présente une forme essentiellement triangulaire et/ou un montant (5) présente une forme essentiellement de quadrilatère et/ou au moins un montant (5, 6), de préférence les deux, présente au moins un entretoisement.

12. Construction support selon l'une quelconque des revendications 1 à 11, **caractérisée en ce que** ladite au moins une zone au niveau de laquelle le dispositif d'entraînement (31) entraîne la partie support (30) est distante d'une zone, de préférence de toutes les zones, au niveau desquelles le dispositif de réglage (32, 42) règle la partie support (30).

13. Construction support (4) selon l'une quelconque des revendications 1 à 12, dans laquelle la construction support (4) comprend des zones de fixation destinées à la fixation de l'unité photovoltaïque (2), **caractérisée en ce que** la construction support (4) peut être assemblée à plat.

14. Construction support (4) selon l'une quelconque des revendications 1 à 13, comprenant :
- une construction de sol (7) qui peut être enfouie en partie dans le sol,
- une structure plane (20) pouvant être enfouie dans le sol qui, à l'état monté, est connectée à la construction de sol (7) de sorte que les forces agissantes sur la structure plane (20) par la charge du matériau du sol (21) peuvent être transmises sur la construction de sol (7) pour l'ancrage sûr de la construction de sol (7) dans le sol, **caractérisée en ce que** la structure plane (20) est conçue flexible.

15. Installation photovoltaïque stationnaire (1) équipée d'une construction support (4) selon l'une quelconque des revendications 1 à 14.
